# EUROPEAN PATENT APPLICATION

(11) **EP 4 683 367 A1**
(43) Date of publication of application: **21.01.2026**
(21) Application number: 23928551.3
(22) Date of filing: 17.03.2023
(51) Int. Cl.: H04W 12/043, H04W 12/033, H04W 12/106, H04W 92/24

(54) **TERMINAL, NETWORK NODE DEVICE, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SAWADA, Masahiro, Tokyo 100-6150 (JP)
(74) Representative: Hoffmann Eitle
(86) International application number: PCT/JP2023/010769
(87) International publication number: WO 2024/194968

(57) **Abstract**

A network node apparatus includes: a reception unit configured to receive, from a first network node apparatus that handles authentication control or service provisioning control, terminal security capability information and a key; a control unit configured to select a security algorithm used for secure communication between a terminal and a second network node apparatus, and to derive a concealment key and an integrity protection key; and a transmission unit configured to transmit the security algorithm, the concealment key, and the integrity protection key to the second network node apparatus, and to transmit the security algorithm to the terminal.

## Description

### Technical Field

The present invention relates to a terminal, a network node apparatus and a communication method in a radio communication system.

### Background Art

In 3GPP (registered trademark) (3rd Generation Partnership Project), in order to realize further increase in system capacities, further increase in data transmission rates, further reduction in delays in radio sections, and the like, a radio communication scheme called 5G or NR (New Radio) (hereinafter, the radio communication scheme is referred to as "5G" or "NR") has been introduced. In 5G, various radio technologies have been studied in order to satisfy the requirement that the delay in the radio section be less than or equal to 1 ms while achieving a throughput greater than or equal to 10 Gps.

In NR, a network architecture including a 5GC (5G Core Network) corresponding to an EPC (Evolved Packet Core) which is a core network in an LTE (Long Term Evolution) network architecture and an NG-RAN (Next Generation-Radio Access Network) corresponding to an E-UTRAN (Evolved Universal Terrestrial Radio Access Network) which is a RAN (Radio Access Network) in the LTE network architecture is introduced (for example, Non-Patent Literature 1).

### Citation List

### Non-Patent Literature

[Non-Patent Literature 1] 3GPP TS 23.501 V18.0.0 (2022-12)

### Summary of Invention

### Technical Problem

An operator serving a terminal that is roaming outside a certain home operator (Home Public Land Mobile Networks (HPLMN)) to which it belongs is called a Visited PLMN (VPLMN). In the related art, the architecture of the mobile communication system is configured on the premise that "the HPLMN trusts the VPLMN".

On the other hand, future mobile communication systems (e.g., 6G) may be based on the premise that "the HPLMN does not trust the VPLMN." However, in the related art, no mobile communication system exists that is based on the premise that "the HPLMN does not trust the VPLMN."

The present invention has been made in view of the above circumstances, and an object of the present invention is to provide a technique that enables a terminal to perform communication safely at the time of roaming even when an HPLMN does not trust a VPLMN.

### Solution to Problem

According to the disclosed technique, there is provided a network node apparatus including:
a reception unit configured to receive, from a first network node apparatus that handles authentication control or service provisioning control, terminal security capability information and a key;
a control unit configured to select a security algorithm used for secure communication between a terminal and a second network node apparatus, and to derive a concealment key and an integrity protection key; and
a transmission unit configured to transmit the security algorithm, the concealment key, and the integrity protection key to the second network node apparatus, and to transmit the security algorithm to the terminal. Advantageous Effects of Invention

According to the disclosed technique, a technique is provided that enables a terminal to perform communication safely at the time of roaming even when an HPLMN does not trust a VPLMN.

### BRIEF DESCRIPTION OF DRAWINGS

[Fig. 1] FIG. 1 is a diagram for explaining an example of a communication system;
[Fig. 2] FIG. 2 is a diagram for explaining an example of a communication system under a roaming environment;
[Fig. 3] FIG. 3 is a diagram for explaining an example of a communication system;
[Fig. 4] FIG. 4 is a diagram showing an example of a U-plane protocol stack;
[Fig. 5] FIG. 5 is a diagram showing an image of communication using UPFSP between the terminals 20 and a hUPF90.
[Fig. 6] FIG. 6 is a diagram for explaining an initial registration procedure at the time of roaming;
[Fig. 7] FIG. 7 is a diagram for explaining an initial registration procedure at the time of roaming;
[Fig. 8] FIG. 8 is a diagram for explaining an initial registration procedure at the time of roaming;
[Fig. 9] FIG. 9 is a diagram for explaining an initial registration procedure at the time of roaming;
[Fig. 10] FIG. 10 is a diagram for explaining an initial registration procedure at the time of roaming;
[Fig. 11] FIG. 11 is a diagram for explaining an initial registration procedure at the time of roaming;
[Fig. 12] FIG. 12 is a diagram for explaining an initial registration procedure at the time of roaming;
[Fig. 13] FIG. 13 is a diagram for explaining an initial registration procedure at the time of roaming;
[Fig. 14] FIG. 14 is a diagram for explaining a mobility registration procedure at the time of roaming;
[Fig. 15] FIG. 15 is a diagram for explaining a mobility registration procedure at the time of roaming;
[Fig. 16] FIG. 16 is a diagram for explaining a mobility registration procedure at the time of roaming;
[Fig. 17] FIG. 17 is a diagram for describing a PDU session establishment procedure at the time of roaming;
[Fig. 18] FIG. 18 is a diagram for describing a PDU session establishment procedure at the time of roaming;
[Fig. 19] FIG. 19 is a diagram for describing a PDU session establishment procedure at the time of roaming;
[Fig. 20] FIG. 20 is a diagram for explaining a terminal originated service request procedure at the time of roaming;
[Fig. 21] FIG. 21 is a diagram for explaining a terminal originated service request procedure at the time of roaming;
[Fig. 22] FIG. 22 is a diagram for explaining a terminal originated service request procedure at the time of roaming;
[Fig. 23] FIG. 23 is a diagram for describing UL data transmission using a PDU session at the time of roaming;
[Fig. 24] FIG. 24 is a diagram for describing DL data transmission using a PDU session at the time of roaming;
[Fig. 25] FIG. 25 is a diagram for describing UL data transmission using a PDU session at the time of roaming;
[Fig. 26] FIG. 26 is a diagram for describing UL data transmission using a PDU session at the time of roaming;
[Fig. 27] FIG. 27 is a diagram for describing UL data transmission using a PDU session at the time of roaming;
[Fig. 28] FIG. 28 is a diagram for explaining a case of NEF-based non-IP data transmission;
[Fig. 29] FIG. 29 is a diagram for explaining NEF-based non-IP data transmission (terminal origination);
[Fig. 30] FIG. 30 is a diagram for explaining NEF-based non-IP data transmission (terminal incoming).
[Fig. 31] FIG. 31 is a diagram showing an example of a functional configuration of a network node apparatus 5 according to an embodiment of the present invention;
[Fig. 32] FIG. 32 is a diagram showing an example of a functional configuration of a terminal 20 according to an embodiment of the present invention;
[Fig. 33] FIG. 33 is a diagram showing an example of a hardware configuration of an apparatus according to an embodiment of the present invention; and
[Fig. 34] FIG. 34 is a diagram showing an example of a configuration of a vehicle in an embodiment of the present invention. Description of Embodiments

Hereinafter, embodiments of the present invention will be described with reference to the drawings. The embodiments described below are examples, and the embodiment to which the present invention is applied is not limited to the following embodiment.

In the operation of the radio communication system according to the embodiment of the present invention, an existing technology is used as appropriate. The existing technology is, for example, existing LTE or existing NR (5G), but is not limited to existing LTE or existing NR.

Furthermore, the names of the messages used in the following description are merely examples. For instance, where a message name bears the letter "h" or "H" denoting the HPLMN, or the letter "v" or "V" denoting the VPLMN, a message name obtained by deleting that letter ("h", "H", "v", or "V") from the message name may be used in place of the original message name. Alternatively, a message name obtained by replacing that letter ("h", "H", "v", or "V") with another letter may be used.

Likewise, the names of the network node apparatuses used in the following description are merely examples. For instance, where a network node apparatus name bears the letter "h" or "H" denoting the HPLMN, or the letter "v" or "V" denoting the VPLMN, a network node apparatus name obtained by deleting that letter ("h", "H", "v", or "V") from the name may be used in place of the original name. Alternatively, a network node apparatus name obtained by replacing that letter ("h", "H", "v", or "V") with another letter may be used.

### (System Configuration Example)

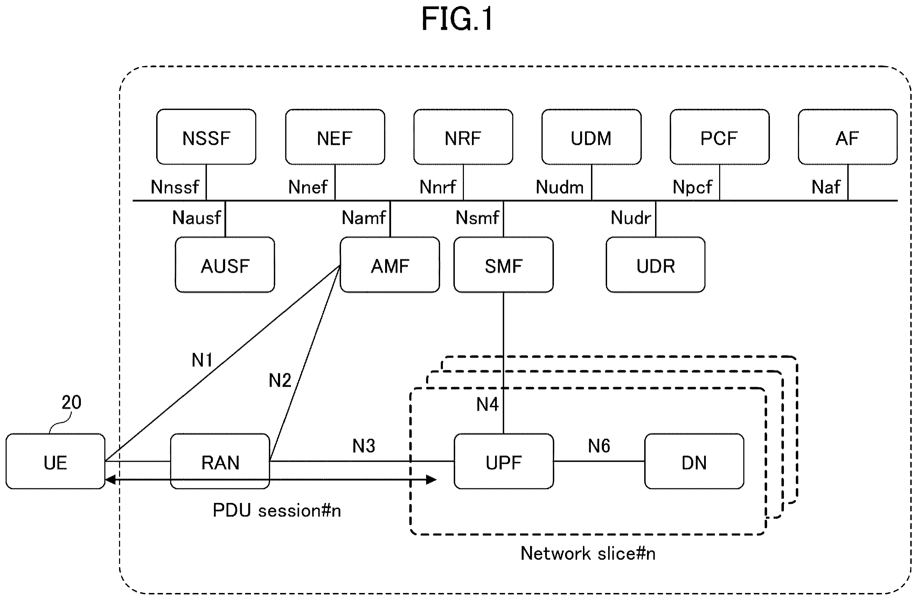

FIG. 1 is a diagram for explaining an example of a communication system. As shown in FIG. 1, the communication system includes a UE which is a terminal 20 and a plurality of network node apparatuses. Hereinafter, it is assumed that one network node apparatus corresponds to each function, but one network node apparatus may realize a plurality of functions, or a plurality of network node apparatuses may realize one function. In addition, "connection" described below may be a logical connection or a physical connection.

A RAN (Radio Access Network) is a network node apparatus having a radio access function, which may include the base station and is connected to a UE, an AMF (Access and Mobility Management Function), and a UPF (User plane function). The AMF is a network node apparatus 30 having functions of termination of a RAN interface, termination of a NAS (Non-Access Stratum), registration management, connection management, reachability management, mobility management, and the like. The UPF is a network node apparatus having functions such as a PDU (Protocol Data Unit) session point for externally interconnecting with a data network (DN), routing and forwarding of packets, and QoS (Quality of Service) handling of a user plane. The UPF and the DN constitute a network slice. In the radio communication network according to an embodiment of the present invention, a plurality of network slices are established.

An AMF is connected to a UE, a RAN, an SMF (Session Management function), an NSSF (Network Slice Selection Function), an NEF (Network Exposure Function), an NRF (Network Repository Function), a UDM (Unified Data Management), a UDR (Unified Data Repository), an AUSF (Authentication Server Function), a PCF (Policy Control Function), and an AF (Application Function). The AMF, the SMF, the NSSF, the NEF, the NRF, the UDM, the UDR, the AUSF, the PCF, and the AF are network node apparatuses that are interconnected via interfaces Namf, Nsmf, Nnssf, Nnef, Nnrf, Nudm, Nudr, Nausf, Npcf, and Naf based on their respective services.

The SMF is a network node apparatus 30 having functions such as session management, IP (Internet Protocol) address assignment and management for a UE, a DHCP (Dynamic Host Configuration Protocol) function, an ARP (Address Resolution Protocol) proxy, a roaming function, and the like. The NEF is a network node apparatus 30 having a function of notifying other NFs (Network Functions) of capabilities and events. The NSSF is a network node apparatus 30 having functions of selecting a network slice to which the UE is connected, determining an allowed NSSAI (Network Slice Selection Assistance Information), determining an NSSAI to be set, determining an AMF set to which the UE is connected, and the like. The PCF is a network node apparatus having a function of performing policy control of the network. The AF is a network node apparatus having a function of controlling the application server. The NRF is a network node apparatus having a function of discovering an NF instance that provides a service. The UDM is a network node apparatus 30 that manages subscriber data and authentication data. The UDM also stores (manages) dynamic information that reflects the connection status and the like of the terminal 20. The UDM is connected to a UDR (User Data Repository) that stores the data.

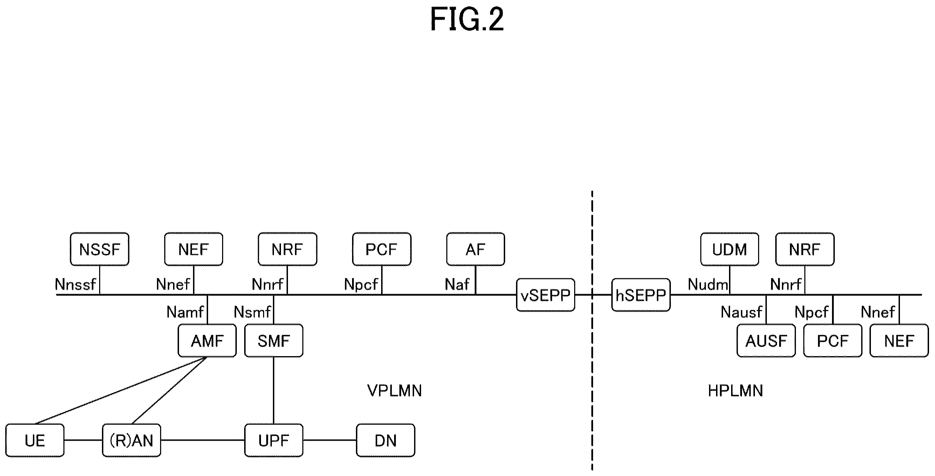

FIG. 2 is a diagram for explaining an example of a communication system under a roaming environment. Note that FIG. 2 shows an example of a configuration under a conventional roaming environment. As shown in FIG. 2, the network includes a UE which is the terminal 20, and a plurality of network node apparatuses.

The RAN is a network node apparatus having a radio access function, and is connected to the UE, the AMF, and the UPF. The AMF is a network node apparatus having functions such as termination of a RAN interface, termination of a NAS, registration management, connection management, reachability management, and mobility management. The UPF is a network node apparatus having functions such as a PDU session point to the outside interconnected with the DN, routing and forwarding of packets, and QoS handling of a user plane. The UPF and the DN constitute a network slice. In a radio communication network according to an embodiment of the present invention, a plurality of network slices are constructed.

The AMF is connected to the UE, the RAN, the SMF, the NSSF, the NEF, the NRF, the UDM, the AUSF, the PCF, the AF, and a security edge protection proxy (SEPP). The AMF, the SMF, the NSSF, the NEF, the NRF, the UDM, the AUSF, the PCF, and the AF are network node apparatuses connected to each other via interfaces Namf, Nsmf, Nnssf, Nnef, Nnrf, Nudm, Nausf, Npcf, and Naf based on respective services.

The SMF is a network node apparatus having functions such as session management, IP address allocation and management of the UE, a DHCP function, an ARP proxy, and a roaming function. The NEF is a network node apparatus having a function of notifying another NF of a capability and an event. The NSSF is a network node apparatus having functions such as selection of a network slice to which the UE connects, determination of allowed NSSAI, determination of configured NSSAI, and determination of an AMF set to which the UE connects. The PCF is a network node apparatus having a function of performing policy control of a network. The AF is a network node apparatus having a function of controlling an application server. The NRF is a network node apparatus having a function of discovering an NF instance that provides a service. The SEPP is a non-transparent proxy that filters control plane messages between public land mobile networks (PLMNs). The vSEPP shown in FIG. 2 is an SEPP in a visited network, and the hSEPP is an SEPP in a home network.

As shown in FIG. 2, the UE is in a roaming environment where the UE is connected to the RAN and the AMF in a visited PLMN (VPLMN). The VPLMN and the HPLMN (Home PLMN) are connected via the vSEPP and the hSEPP. The UE can communicate with the UDM of the HPLMN via the AMF of the VPLMN, for example.

Hereinafter, a first embodiment and a second embodiment will be described. The second embodiment is based on the first embodiment, and a part of the configuration and operation of the first embodiment is changed. However, the technique according to the second embodiment may be implemented independently of the first embodiment.

### (Problems of First Embodiment)

An operator serving the terminal 20 that is roaming outside a certain home operator (Home Public Land Mobile Networks (HPLMN) to which it belongs is called a Visited PLMN (VPLMN).

The architecture of mobile communication system before 5GS is configured on the premise that threats (such as eavesdropping and spoofing) are outside the cooperation of the PLMN, that is, "the HPLMN trusts the VPLMN".

For example, the VPLMN AMF acquires a subscription permanent identifier (SUPI) of the terminal 20 from the HPLMN AUSF after terminal authentication, and the VPLMN AMF acquires subscriber information of the terminal 20 from the HPLMN UDM. Since the NAS security is terminated at the VPLMN AMF, the VPLMN AMF can see all messages between the terminal 20 and the HPLMN NF.

In discussions on 5GS, the idea that "the HPLMN does not trust the VPLMN" has emerged among some discussion participants. In 5GS, messages of SOR (Steering of Roaming) and UPU (UE Parameters Update) sent from the HPLMN to the terminal 20 via the VPLMN are integrity-protected because there is a concern that the contents of the messages may be rewritten in the VPLMN. However, a malicious VPLMN AMF can monitor the content and subscriber information of all messages related to the terminal 20 having a specific SUPI, accumulate communication preferences and communication history of the SUPI, and manipulate messages (other than SOR and UPU) to provide inappropriate services. That is, 5GS does not have a suitable architecture in the situation where "the HPLMN does not trust the VPLMN".

In future mobile communication systems (e.g., 6G), it may become necessary to design the architecture on the premise that "the HPLMN does not trust the VPLMN." However, at present, no such architecture exists in the related art.

Hereinafter, a system configuration and operation for solving the above problem will be described.

### (System Configuration Example of Present Embodiment)

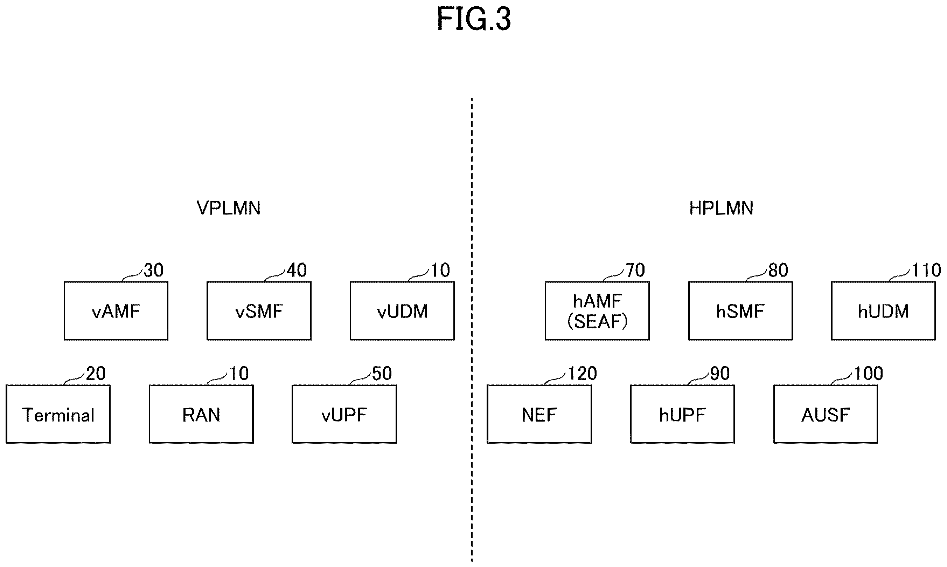

In the present embodiment, a situation is assumed in which the terminal 20 roams to a certain PLMN (VPLMN). FIG. 3 shows an example of the system configuration (a group of apparatuses included in the system) in this situation. FIG. 3 is common to the first embodiment and the second embodiment.

As shown in FIG. 3, a terminal 20, a RAN 10, a vAMF 30, a vSMF 40, a vUPF 50, and a vUDM 60 are present in the VPLMN, and an hAMF 70, an hSMF 80, an hUPF 90, an AUSF 100, an hUDM 110, an NEF 120 are present in the HPLMN. The operation of each apparatus will be described in sequences and the like described later.

### (Overview of First Embodiment)

In the present embodiment, in order to solve the above problem, the following functions are introduced in each of the C-plane perspective and the U-plane perspective.

### <C Plane Perspective>

A mechanism is introduced that enables a message related to authentication or service provision to be concealed and integrity-protected between the terminal 20 and the HPLMN, and enables processing in the VPLMN to be performed anonymously. Specifically, the mechanisms for (1) AMF and (2) SMF are introduced as follows.

### (1) AMF

The AMF is separated into the vAMF 30 located in the VPLMN and the hAMF located in the HPLMN.

### (1-1) vAMF30

The vAMF30 has the following functions.

- Terminating vNAS security.
- Performing processing on the anonymous processing object based on a request from the HPLMN.
- Performing serving network registration control.
- Performing location registration, connection control including paging, and HO control.
- Performing the following process 1 and process 2 for a series of procedures related to NAS.

Process 1: Receiving a message that the VPLMN NF transmits to the HPLMN NF and forwarding the message to the hAMF 70.

Process 2: Receiving a message, from the hAMF 70, that the HPLMN NF transmits to the VPLMN NF, and delivering the message to the VPLMN NF.

### (1-2) hAMF70

The hAMF 70 has the following functions.

- Terminating hNAS security.
- Having a security anchor function (SEAF), performing authentication, and performing processing in consideration of the SUPI.
- Performing home network registration control.
- Handling service provisioning control based on subscriber information.

Note that, regarding service provisioning control, in addition to the hAMF70 performing control, the hAMF 70 relays messages related to control performed by an SMF or an SMSF (Short Message Service Function) (in the HPLMN).

- Performing the following process 1 and process 2 for a series of procedures related to NAS.

Process 1: Receiving a message sent by the HPLMN NF to the VPLMN NF and forwarding the message to the vAMF 30.

Process 2: Receiving the message sent by the VPLMN NF to the HPLMN NF from the vAMF 30 and delivering the message to the HPLMN NF.

### (2) SMF

With respect to the SMF, the functional split between the vSMF 40 deployed in the VPLMN and the hSMF deployed in the HPLMN is changed from the conventional arrangement.

### (2-1) vSMF 40

The vSMF 40 has the following functions.

- Based on an instruction from the hSMF 80, the vSMF 40 instructs the vUPF 50 to set a PDU session data-relay route. In the conventional technique, conversely, the vSMF 40 sends an instruction to the hSMF 80.
- Performing processing on an anonymous processing object. That is, the vSMF 40 performs the processing without grasping the SUPI to be processed. Note that in the related art, the vSMF 40 grasps the SUPI.

### (2-2) hSMF 80

The hSMF 80 has the following functions.

- Terminating a PDU session establishment request transmitted by the terminal 20. Note that, in the conventional technology, the vSMF 40 terminates the PDU session establishment request.
- Instructing the hUPF 90 to set a data route of a PDU session. Also, the hSMF 80 instructs the vSMF 40 to set the data route. In the related art, conversely, the vSMF 40 gives an instruction to the hSMF 80.

### <U-Plane Perspective>

In the U-plane, concealing and integrity protection between the terminal 20 and the HPLMN UPF is introduced. Specifically, the following is introduced.

- The hSMF 80 controls the establishment of a concealed and integrity-protected communication route.
- Each of the terminal 20 and the hUPF 90 newly has a UPFSP (= UPF security protocol layer) on a service data adaptation protocol (SDAP) in a U-plane protocol stack. In each of the terminal 20 and the hUPF 90, the operation related to the SDAP and the UPFSP is as follows.

The UPFSP integrity-protects and encrypts each packet of a QoS flow, except for 5tuple, and passes it to the SDAP. Note that "5tuple=source/destination IP addresses, transport protocol type, and source/destination port numbers". The UPFSP decrypts packets obtained from the SDAP and verifies integrity of the packets, and returns them to the QoS flow.

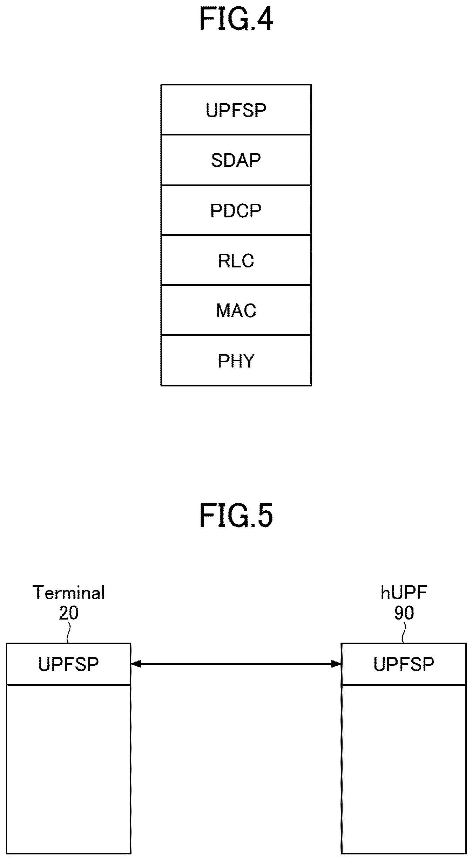

FIG. 4 shows an example of the U-plane protocol stack of the terminal 20 and the hUPF 90. Note that in the hUPF 90, the protocol layer below the UPFSP may not be the SDAP. FIG. 5 shows an image of performing communication that is concealed and integrity-protected using the UPFSP between the terminal 20 and the hUPF 90.

Hereinafter, key operations using the above-described functions will be described, and then detailed procedure examples will be described. In the first embodiment, the following operations 1 to 3 are the key operations.

### (Operation 1: Operation related to hNAS Concealment Integrity Protection)

### <Terminal 20>

In the operation 1, the terminal 20 classifies a message destined for the core network into a message (=hNAS) related to authentication control or service provisioning control and a message (=vNAS) related to mobility control or connection control, and the terminal 20 conceals and integrity-protects the former message against a network node (=vAMF 30) of the core network that handles mobility control or connection control, and includes the former message within the latter message (=vNAS), and transmits it to the network.

### <hAMF 70>

In the operation 1, the hAMF 70 applies concealment and integrity protection to a message for the terminal 20 that relates to authentication control or service provisioning control, with respect to a network node (=vAMF 30) of the core network that handles mobility control or connection control, and transmits the message to the terminal 20 via the network node (=vAMF 30). The vAMF 30 is located in the VPLMN, and the vAMF 30 is located in the HPLMN.

### <vAMF 30>

In the operation 1, the vAMF 30 receives a message, from the terminal 20, relating to mobility control or access control, determines from the key set identifier (=ngKSI) contained therein whether re-authentication is required, and if re-authentication is required, forwards the message to the network node (=hAMF 70) of the core network that handles authentication control or service provisioning control.

### (Operation 2: Operation related to SUPI Non-disclosure)

### <vAMF30>

In operation 2, using an identifier (=vAMF to hAMF UE ID) associated with the terminal context within the network node (=hAMF 70)of the core network that handles authentication control or service provisioning control, the vAMF 30 performs mobility control or connection control processing without using the permanent identifier (SUPI) of the terminal 20.

### <vSMF 40>

In the operation 2, the vSMF 40 receives an instruction from the network node of the core network (=hSMF 80) that determines establishment of a PDU session in consideration of subscriber information based on a request from the terminal 20, identifies the target PDU session using the terminal temporary identity (=5G-VGUTI) assigned by the network node of the core network that performs a process of mobility control or connection control in association with the cooperation identifier (=vAMF to hAMF UE ID) and the identifier of the PDU session (=PDU session ID) assigned by the terminal 20 without using the permanent identity (=SUPI) of the terminal 20, and configures a data relay route related to the PDU session. The hSMF 80 is in the HPLMN and the vSMF 40 is in the VPLMN.

### (Operation 3: Operation related to Concealment Integrity Protection Between Terminal and UPF)

### <hSMF 80>

In the operation 3, the hSMF 80 receives the terminal security capability and the key from the network node (=hAMF 70) of the core network that handles authentication control or service provisioning control, selects a security algorithm to be used, derives a concealment key and an integrity-protection key, sends the selected security algorithm and the two keys to the hUPF 90, sends the selected security algorithm to the terminal 20, and establishes a secure communication route between the terminal 20 and the hUPF 90.

### <Terminal 20>

Regarding the concealment integrity protection between terminal and UPF, the operation that is the point of the terminal 20 is the operation described above as the "U-plane perspective".

### (Processing Procedure Example of First Embodiment)

Hereinafter, an example of a processing procedure executed in the communication system in the first embodiment will be described with reference to the drawings. The procedure of the first embodiment (and the second embodiment) partially utilizes messages/procedures of an existing technical specification already published before the application. The name of the existing technical specification is shown in parentheses.

Furthermore, for ease of understanding, the step numbers in the procedures described below are defined such that each grouped procedure starts from S1 (Step 1). For example, the initial registration procedure during roaming starts at S1 and completes at S59, and thereafter the mobility registration procedure during roaming starts again from S1.

### (Initial registration procedure during roaming)

First, the initial registration procedure at the time of roaming will be described.

### <S1>

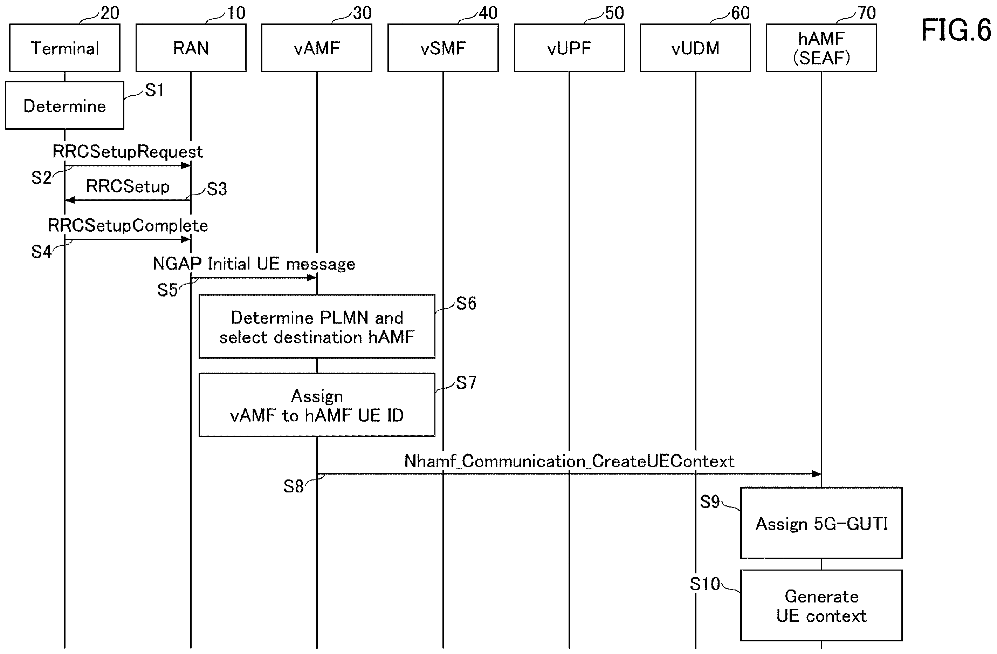

In S1 of FIG. 6, the terminal 20 determines to transmit a registration request to the vAMF 30 (TS 23.502, 4.2.2.2.2, step 1) (TS 33.501, 6.4.6, step1) using an initial NAS message protection mechanism.

The registration request message is in plaintext and only includes a subscription concealed identifier (SUCI), a terminal security capability, and a key set identifier in 5G (ngKSI). The value of ngKSI is "no key available" here.

The registration request message will be referred to as "registration request (initial NAS part)" hereinafter. The registration request message is a vNAS (=NAS message terminated at the vAMF 30).

### <S2 to S5>

In S2, the terminal 20 transmits RRCSetupRequest to the RAN 10 (TS 38.331, 5.3.3.1). In S3, the RAN 10 transmits RRCSetup to the terminal 20 (TS 38.331, 5.3.3.1).

In S4, the terminal 20 transmits RRCSetupComplete to the RAN 10 (TS 38.331, 5.3.3.1). The RRCSetupComplete message includes a registration request (initial NAS part).

In S5, the RAN 10 transmits an NGAP initial UE message to the vAMF 30 (TS 38.413, 8.6.1.2). The NGAP initial UE message includes a registration request (initial NAS part).

### <S6>

In S6, the vAMF 30 determines the PLMN to which the registration request (initial NAS part) should be transferred based on the home network identity (=MCC+MNC) in the SUCI (TS23. 003, 2.2B). The vAMF 30 also discovers and selects a destination hAMF 70 based on local information or information obtained via the NRF.

### <S7>

In S7, the vAMF 30 assigns a "vAMF to hAMF UE ID" to the hAMF 70. The ID is an ID assigned by the vAMF 30, and is an ID for the vAMF 30 to identify the terminal 20 in the hAMF 70 over a service based interface (SBI).

### <S8>

In S8, the vAMF 30 transmits Nhamf _Communication_CreateUEContext to the hAMF 70. The message includes the registration request (initial NAS part) and a "vAMF to hAMF UE ID". In the above message, in order to distinguish the vAMF 30 and the hAMF 70, Nhamf is described instead of Namf.

### <S9 and S10>

In S9, the hAMF 70 assigns a 5G Global Unique Temporary Identifier (5G GUTI) to the terminal 20. In S10, the hAMF 70 generates a terminal context for 5G-GUTI and SUCI.

### [Authentication Procedure Part: S11 to S26]

Next, the authentication procedure part will be described as S11 to S26. In the following procedure, when SEAF contained in the hAMF 70 is involved in the process, it is described as "hAMF/SEAF 70".

### <S11>

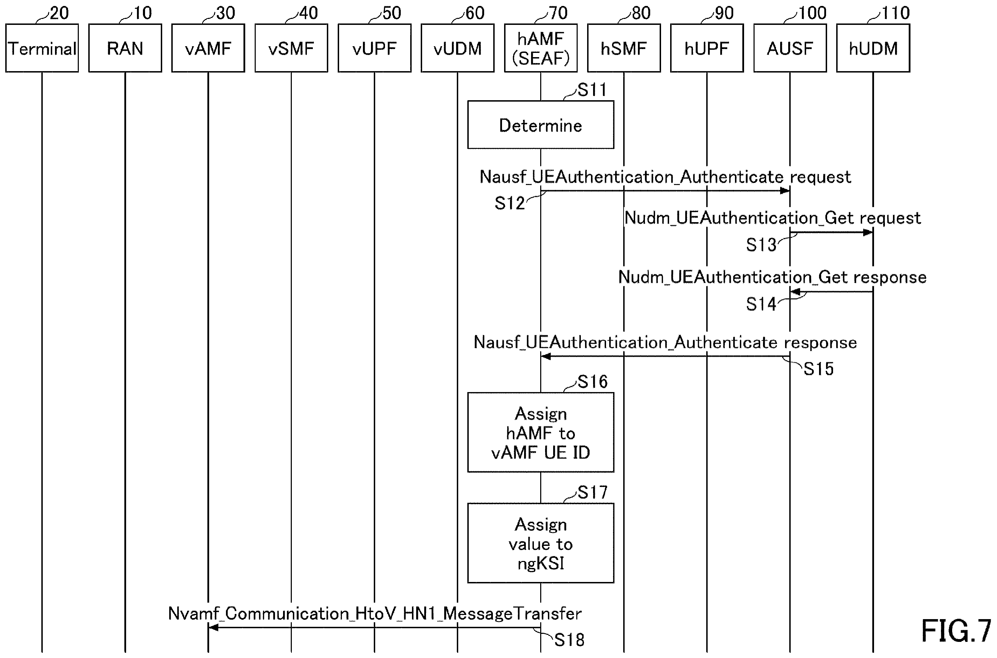

In S11 of FIG. 7, the hAMF/SEAF 70 determines that it needs to perform an authorization procedure because the value of ngKSI is "no key available".

### <S12 to S15>

In S12, the hAMF/SEAF 70 transmits a Nausf_UEAuthentication_Authenticate request to the AUSF 100 (TS 33.501, 6.1.2, step2).

In S13, the AUSF 100 transmits a Nudm_UEAuthentication_Get to the hUDM 110 (TS 33.501, 6.1.2, step3). In S14, the hUDM 110 transmits a Nudm_UEAuthentication_Get response to the AUSF 100 (TS 33.501, 6.1.3.2.0, step2).

In S15, the AUSF 100 transmits a Nausf_UEAuthentication_Authenticate response to the hAMF/SEAF 70 (TS 33.501, 6.1.3.2.0, step5).

### <S16 to S17>

In S16, the hAMF 70 assigns "hAMF to vAMF UE ID" to the vAMF 30. The ID is an ID assigned by the hAMF 70, and is an ID for the hAMF 70 to identify the terminal 20 in the vAMF 30 over the SBI. In S17, the hAMF 70 assigns ngKSI an arbitrary value.

### <S18>

In S18, the hAMF/SEAF 70 transmits Nvamf_Communication_HtoV_HN1_MessageTransfer to the vAMF 30 (TS 33.501, 6.1.3.2.0, step6).

The Nvamf_Communication_HtoV_HN1_MessageTransfer includes an hNAS container, a "vAMF to hAMF UE ID", and a "hAMF to vAMF UE ID". The hNAS container includes an authentication request. The authentication request includes ngKSI.

Subsequent messages between the hAMF 70 and the vAMF 30 always include "vAMF to hAMF UE ID" and "hAMF to vAMF UE ID". However, for simplification of description, the description "including "vAMF to hAMF UE ID" and "hAMF to vAMF UE ID"" will be omitted hereinafter.

### <S19 and S20>

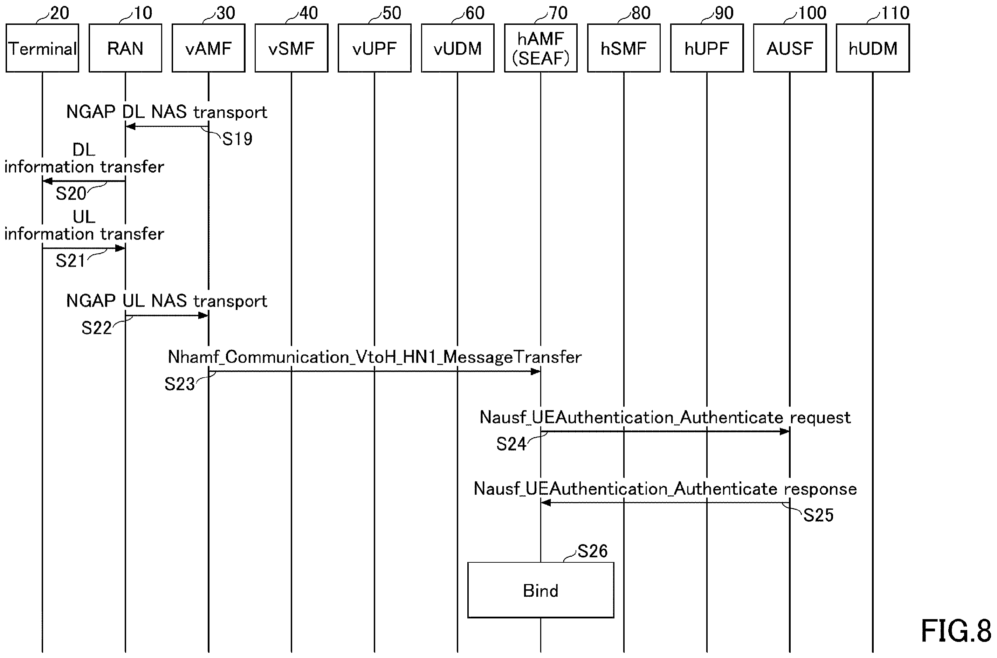

In S19 of FIG. 8, the vAMF 30 transmits an NGAP DL NAS transport to the RAN 10. The message includes a vNAS DL NAS transport IE. The IE also includes an hNAS container.

In S20, the RAN 10 transmits a DL information transfer to the terminal 20. The message includes a vNAS DL NAS transport IE.

### <S21 and S22>

In S21, the terminal 20 transmits an UL information transfer to the RAN 10. The message includes a vNAS UL NAS transport IE. The IE includes an hNAS container. The hNAS container also contains an authentication response (TS 33.501, 6.1.3.2.0, step8).

In S22, RAN10 sends NGAP UL NAS transport to vAMF30. The message includes a vNAS UL NAS transport IE.

### <S23 to S25>

In S23, the vAMF 30 transmits Nhamf_Communication_VtoH_HN1_MessageTransfer to the hAMF/SEAF 70 (TS 33.501, 6.1.3.2.0, step8). The message includes an hNAS container.

In S24, the hAMF/SEAF 70 transmits a Nausf_UEAuthentication_Authenticate to the AUSF 100 (TS 33.501, 6.1.3.2.0, step10).

In S25, the AUSF 10 transmits a Nausf_UEAuthentication_Authenticate response to the hAMF/SEAF 70 (TS 33.501, 6.1.3.2.0, step12). The message includes SUPI and K_{SEAF}.

### <S26>

In S26, the hAMF/SEAF 70 binds the SUPI of the terminal 20 to the terminal context whose generation was previously initiated with respect to the 5G-GUTI and SUCI. This terminal context also includes K_{SEAF}.

### [Security configuration part: S27 to S36]

Next, the security configuration part will be described as S27 to S36.

### <S27 and S28>

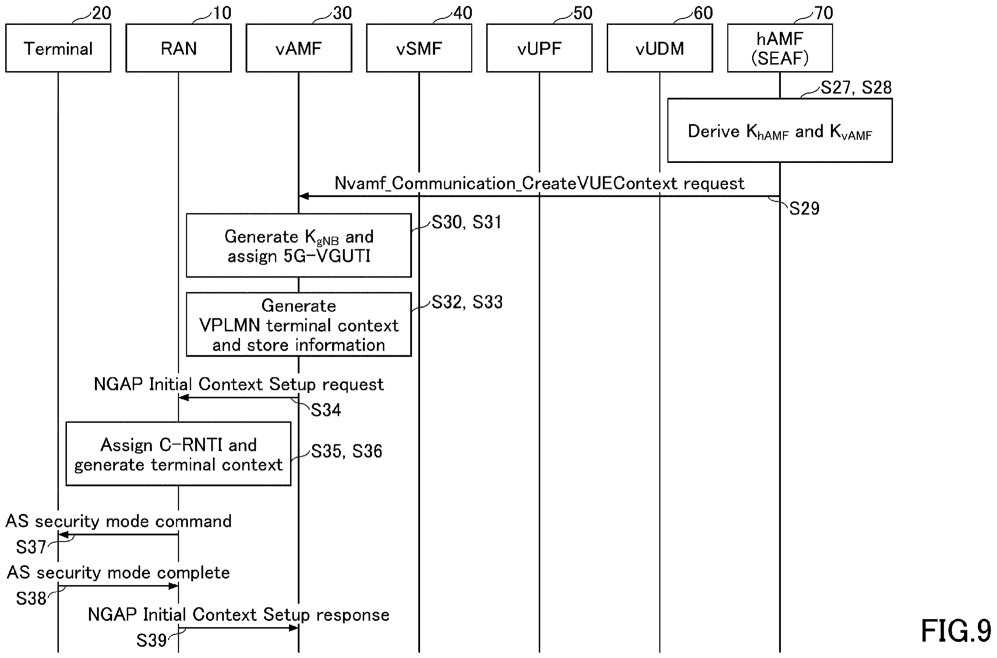

In S27 of FIG. 9, the hAMF/SEAF 70 derives K_{hAMF} from K_{SEAF}. The hAMF/SEAF 70 eliminates K_{SEAF}. The K_{hAMF} may be K_{AMF} of an existing technical specification. In S28, the hAMF/SEAF 70 derives K_{vAMF} from K_{hAMF}.

### <S29>

In S29, the hAMF/SEAF 70 transmits a Nvamf_Communication_CreateVUEContext request to the vAMF 30. The message includes the K_{vAMF}, terminal security capability, and ngKSI.

### <S30 and S31>

In S30, the vAMF 30 generates K_{gNB} from K_{vAMF}. In S31, the vAMF 30 assigns 5G-VGUTI to the terminal 20. The 5G-VGUTI is a globally unique temporary ID assigned by the vAMF 30.

### <S32 and S33>

In S32, the vAMF 30 generates a VPLMN terminal context for 5G-VGUTI. In S33, the vAMF 30 holds 5G-VGUTI, K_{vAMF}, K_{gNB}, terminal security capability, ngKSI, in the VPLMN terminal context.

### <S34 to S36>

In S34, the vAMF 30 transmits to the RAN 10 an NGAP Initial Context Setup request (TS 38.413, 9.2.2.1). The message includes K_{gNB}, and terminal security capability.

In S35, the RAN 10 assigns a C-RNTI to the terminal 20. In S36, the RAN 10 generates a terminal context for the C-RNTI.

### [AS Security Configuration Part: S37 to S39]

In S37 to S39, the AS security configuration part will be described in the following.

### <S37 to S39>

In S37, the RAN 10 transmits an AS security mode command to the terminal 20 (TS 33.501, 6.7.4, step1b). The message includes the selected AS security algorithm.

In S38, the terminal 20 transmits an AS security mode complete to the RAN 10 (TS 33.501, 6.7.4, step2b). In S39, the RAN 10 transmits an NGAP Initial Context Setup response (TS 38.413, 9.2.2.2) to the vAMF 30.

### [vNAS Security Configuration Part: S40 to S44]

Next, a vNAS security configuration part in S40 to S44 will be described.

### <S40 and S41>

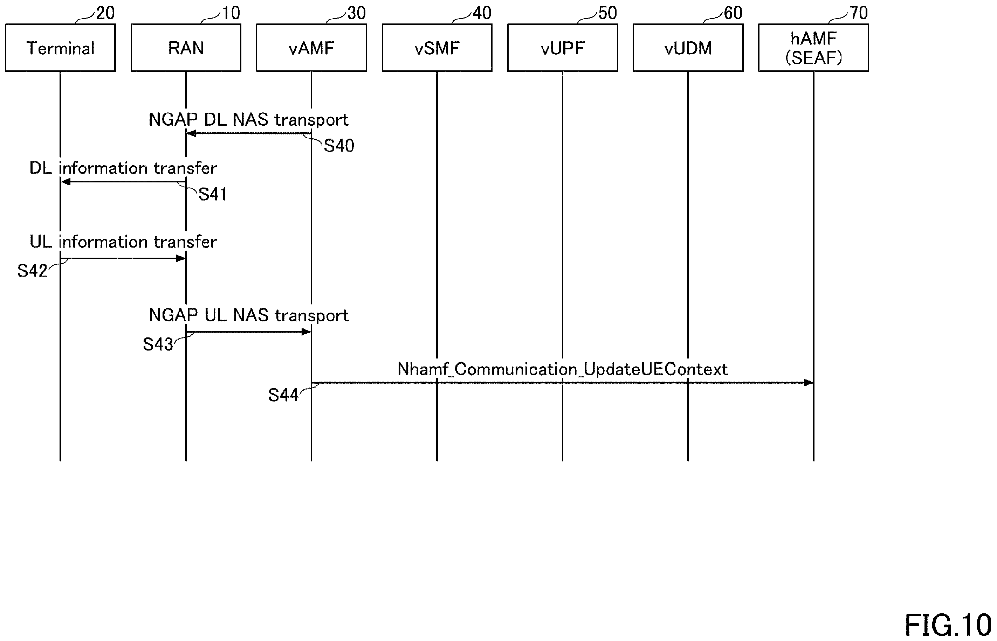

In S40 of FIG. 10, the vAMF 30 transmits an NGAP DL NAS transport to the RAN 10. The message includes a vNAS security mode command (TS 33.501, 6.7.2, step1b). The command includes the terminal security capability and the selected vNAS security algorithm.

In S41, the RAN 10 transmits a DL information transfer to the terminal 20. The message includes a vNAS security mode command (TS 33.501, 6.7.2, step1b).

### <S42 and S43>

In S42, the terminal 20 transmits UL information transfer to the RAN 10. The message includes vNAS security mode complete (TS 33.501, 6.7.2, step2b). The vNAS security mode complete includes a registration request (initial NAS part) and a registration request (vNAS part) (= information required by the vAMF 30 (e.g., last visited area registration TAI)) of the registration request.

In S43, the RAN 10 transmits an NGAP UL NAS transport to the vAMF 30. The message includes vNAS security mode complete (TS 33.501, 6.7.2, step2b).

### <S44>

In S44, the vAMF 30 transmits Nhamf_Communication_UpdateUEContext to the hAMF/SEAF 70. The message includes an AS/vNAS security complete notification IE. Note that the IE is set so that the AS/vNAS security procedure and the hNAS security procedure do not occur at the same time.

### [hNAS Security Configuration Part: S45 to S50]

Next, the hNAS security configuration part will be described as S45 to S50.

### <S45>

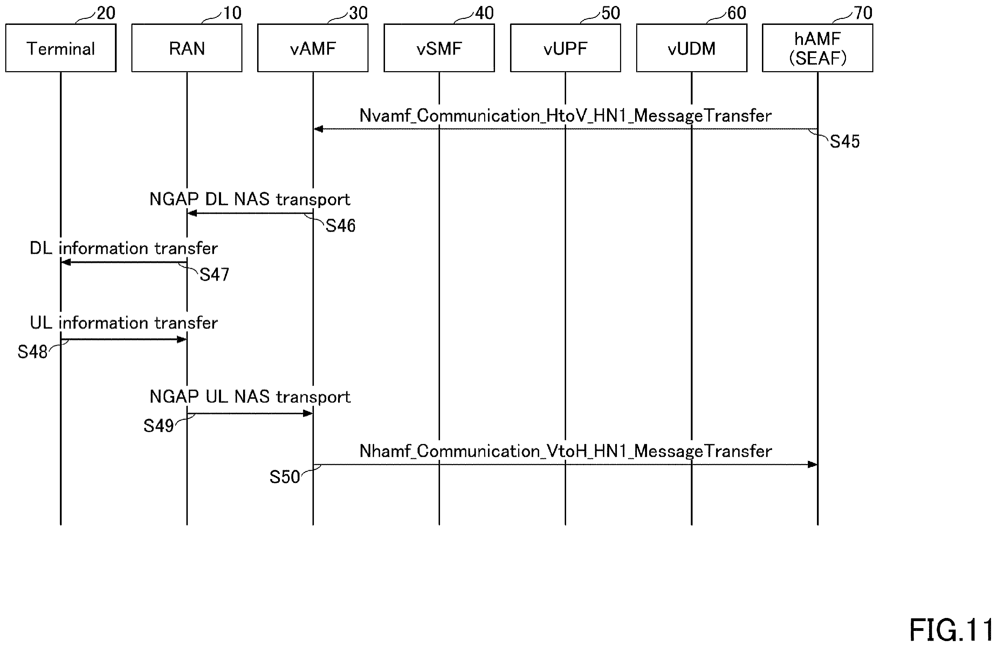

In S45 of FIG. 11, the hAMF/SEAF 70 transmits Nvamf_Communication_HtoV_HN1_MessageTransfer to the vAMF 30. The message includes an hNAS container. The hNAS container contains the hNAS security mode command (TS 33.501, 6.7.2, step1b). The command includes the terminal security capability and the selected hNAS security algorithm.

### <S46 and S47>

In S46, the vAMF 30 transmits NGAP DL NAS transport to the RAN 10. The message includes a vNAS DL NAS transport IE. The IE includes an hNAS container.

In S47, the RAN 10 transmits a DL information transfer to the terminal 20. The message includes a vNAS DL NAS transport IE.

### <S48>

In S48, the terminal 20 transmits UL information transfer to the RAN 10. The message includes a vNAS UL NAS transport IE. The IE includes an hNAS container. The hNAS container contains hNAS security mode complete (TS 33.501, 6.7.2, step2b).

The hNAS security mode complete includes all pieces of information of the registration request. That is, it includes a registration request (initial NAS part), a registration request (vNAS part), and a registration request (hNAS part) (=information required by the hAMF 70 (e.g., requested NSSAI)).

### <S49 and S50>

In S49, the RAN 10 transmits NGAP UL NAS transport to the vAMF 30. The message includes a vNAS UL NAS transport IE.

In S50, the vAMF 30 transmits Nhamf_Communication_VtoH_HN1_MessageTransfer to the hAMF/SEAF 70. The message includes an hNAS container (TS 33.501, 6.7.2, step2b).

### [Part of Cooperation with UDM: S51 to S54]

Next, a part of cooperation with the UDM will be described as S51 to S54.

### <S51>

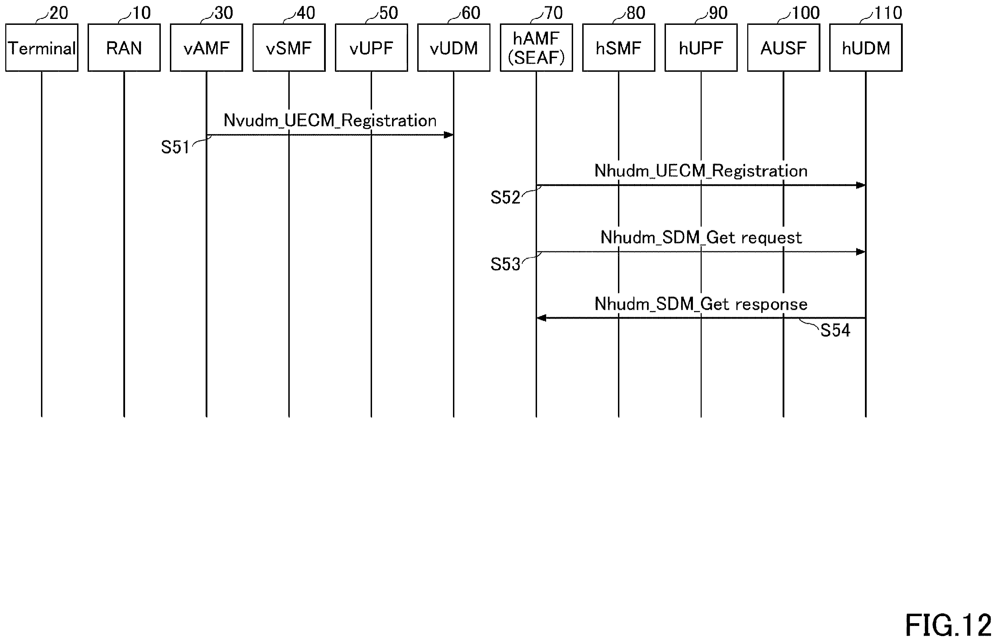

In S51 of FIG. 12, the vAMF 30 transmits Nvudm_UECM_Registration to the vUDM 60 (after AS/vNAS security completes) (TS 23.502, 4.2.2.2.2, step14a). If the message includes the terminal identifier, the message includes 5G-VGUTI as the terminal identifier.

### <S52 to S54>

In S52, the hAMF 70 transmits Nhudm_UECM_Registration to the hUDM 110 (after hNAS security completes) (TS 23.502, 4.2.2.2.2, step14a). In a case where the message includes a terminal identifier, the message includes the SUPI as the terminal identifier.

In S53, the hAMF 70 transmits a Nhudm_SDM_Get request to the hUDM 110 (TS 23.502, 4.2.2.2.2, step14a). In S54, the hUDM 110 transmits a Nhudm_SDM_Get response to the hAMF 70 (TS 23.502, 4.2.2.2.2, step14a). The message includes subscriber information.

### [Registration Response Part: S55 to S59]

Next, the registration response part will be described as S55 to S59.

### <S55>

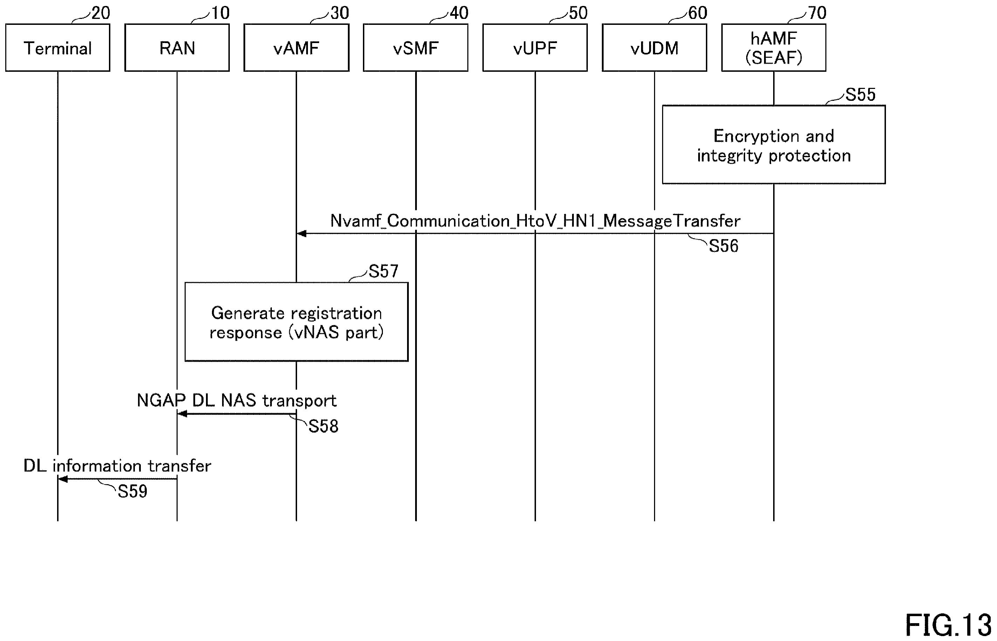

In S55 of FIG. 13, the hAMF 70 generates a registration response (hNAS part), and encrypts and integrity-protects the response by hNAS security. The registration response (hNAS part) includes 5G-GUTI and additionally content related to service provision such as allowed

### NSSAI.

### <S56>

In S56, the hAMF 70 transmits Nvamf_Communication_HtoV_HN1_MessageTransfer to the vAMF 30. The message includes an hNAS container. The hNAS container includes a registration response (hNAS part).

### <S57>

In S57, the vAMF 30 generates a register response (vNAS part). The register response (vNAS part) includes contents related to connection control such as a TAI list in addition to 5G-VGUTI.

### <S58 and S59>

In S58, the vAMF 30 transmits an NGAP DL NAS transport to the RAN 10. The message includes the registration response. The vAMF 30 encrypts and integrity-protects the registration response. The registration response includes the registration response (vNAS part) and the hNAS container.

In S59, the RAN 10 transmits a DL information transfer to the terminal 20. The message includes the registration response.

The initial registration procedure at the time of roaming is completed as described above.

### (Mobility Registration Procedure at Time of Roaming)

Next, the mobility registration procedure at the time of roaming is described. This procedure is performed entirely within the VPLMN.

### <S1>

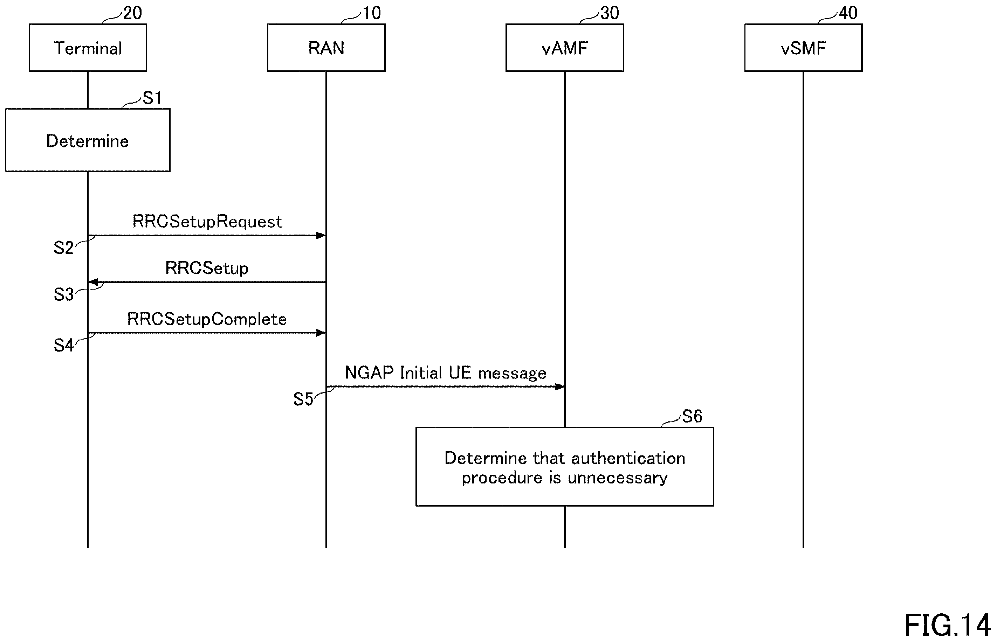

In S1 of FIG. 14, the terminal 20 determines to transmit a registration request to the vAMF 30 (TS 23.502, 4.2.2.2.2, step1) (TS 33.501, 6.4.6, step1) using the initial NAS message protection mechanism.

The registration request message is in plaintext and only includes 5G-VGUTI, terminal security capability, and ngKSI. The registration request message will be referred to as "registration request (initial NAS part)" hereinafter. The message is a vNAS (=NAS message terminated at the vAMF 30).

The value of the ngKSI is a value that was previously allocated by the hAMF 70 and stored by the vAMF 30 in the VPLMN terminal context.

### <S2 to S4>

In S2, the terminal 20 transmits RRCSetupRequest to the RAN 10 (TS 38.331, 5.3.3.1). In S3, the RAN 10 transmits RRCSetup to the terminal 20 (TS 38.331, 5.3.3.1).

In S4, the terminal 20 transmits RRCSetupComplete to RAN10 (TS 38.331, 5.3.3.1). The message includes a registration request (initial NAS part).

### <S5 and S6>

In S5, the RAN 10 selects the vAMF 30 based on the 5G-VGUTI value and transmits an NGAP Initial UE Message to the vAMF 30 (TS 38.413, 8.6.1.2). This message includes the registration request (initial NAS part).

In S6, the vAMF 30 determines that the authentication procedure is not needed because the value of ngKSI in the registration request (Initial NAS part) matches the value of ngKSI in the VPLMN terminal context of 5G-VGUTI.

### [Security Configuration Part: S7 to S8]

The security configuration part will be described in S7 to S8.

### <S7 to S8>

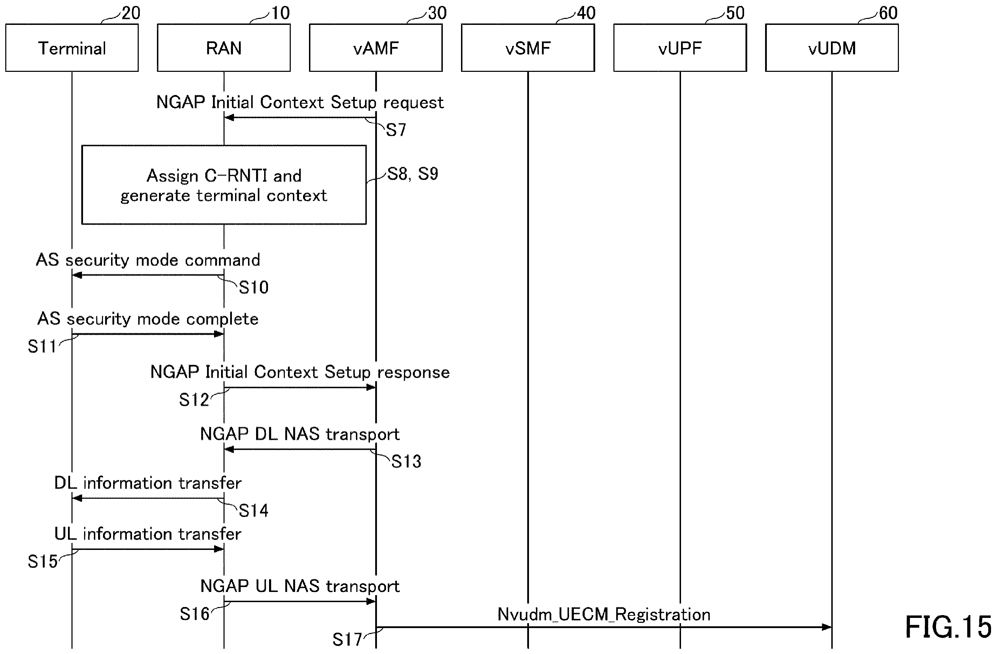

In S7 of FIG. 15, the vAMF 30 transmits an NGAP Initial Context Setup request (TS 38.413, 9.2.2.1) to the RAN 10. The message includes K_{gNB}, and terminal security capability.

In S8, the RAN 10 assigns a C-RNTI to the terminal 20. In S9, the RAN10 generates a terminal context for the C-RNTI.

### [AS Security Configuration Part: S10 to S12]

In S10 to S12, the AS security configuration part will be described.

### <S10 to S12>

In S10, the RAN 10 transmits an AS security mode command to the terminal 20 (TS 33.501, 6.7.4, step1b). The message includes the selected AS security algorithm.

In S11, the terminal 20 transmits an AS security mode complete to the RAN 10 (TS 33.501, 6.7.4, step2b). In S12, the RAN 10 transmits an NGAP Initial Context Setup response (TS 38.413, 9.2.2.2) to the vAMF 30.

### [vNAS Security Configuration Part: S13 to S16]

In S13 to S16, the vNAS security configuration part will be described.

### <S13 and S14>

In S13, the vAMF 30 transmits an NGAP DL NAS transport to the RAN 10. The message includes a vNAS security mode command (TS 33.501, 6.7.2, step1b). The command includes the terminal security capability and the selected vNAS security algorithm.

In S14, the RAN 10 transmits a DL information transfer to the terminal 20. The message includes the vNAS security mode command (TS 33.501, 6.7.2, step1b).

### <S15 and S16>

In S15, the terminal 20 transmits an UL information transfer to the RAN 10. The message includes a vNAS security mode complete (TS 33.501, 6.7.2, step2b).

The vNAS security mode complete includes all pieces of information of the registration request. That is, it includes the registration request (initial NAS part) and the registration request (vNAS part) (=information required by the vAMF (e.g., last visited registration TAI)) are included.

In S16, the RAN 10 transmits an NGAP UL NAS transport to the vAMF 30. The message includes a vNAS security mode complete (TS 33.501, 6.7.2, step2b).

### [Part of Linkage with UDM: S17]

### <S17>

In S17, the vAMF 30 transmits Nvudm_UECM_Registration to the vUDM60 (after AS/vNAS security completes) (TS 23.502, 4.2.2.2.2, step14a). If the message includes a terminal identifier, the message includes 5G-VGUTI as the terminal identifier.

### [Registration Response Part: S18 to S20]

Next, the registration response part will be described in S18 to S20.

### <S18>

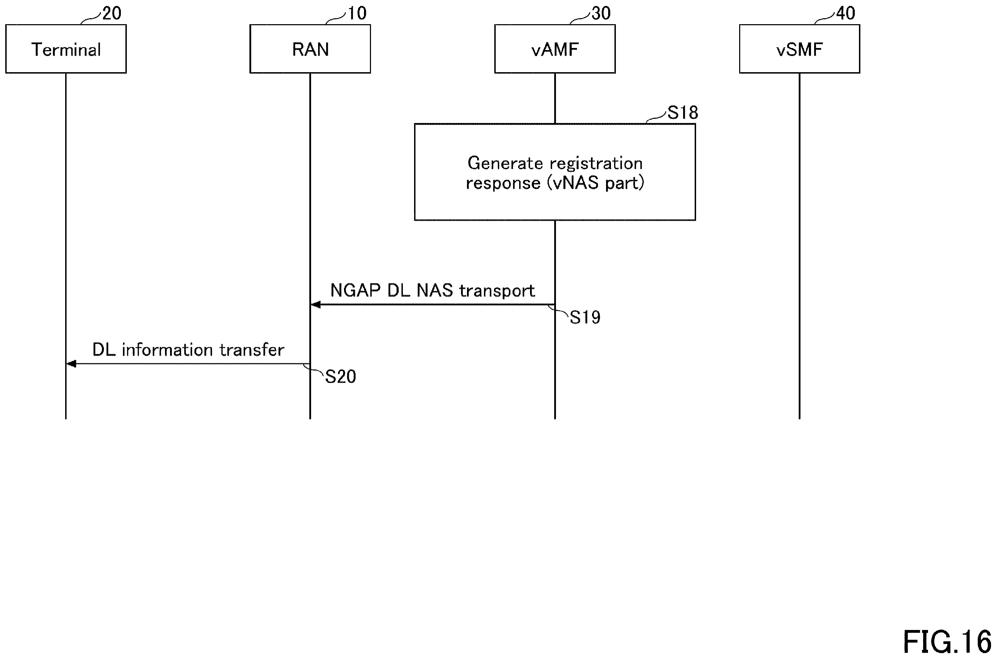

In S18 of FIG. 16, the vAMF 30 generates a registration response (vNAS part). The registration response (vNAS part) includes contents related to connection control such as a TAI list in addition to 5G-VGUTI.

### <S19 and S20>

In S19, the vAMF 30 transmits an NGAP DL NAS transport to the RAN 10. The message includes the registration response. The vAMF 30 also encrypts and integrity-protects the registration response. The registration response includes the registration response (vNAS part).

In S20, the RAN 10 transmits a DL information transfer to the terminal 20. The message includes the registration response.

This completes the mobility registration procedure at the time of roaming.

### (PDU Session Establishment Procedure at Time of Roaming)

Next, the PDU session establishment procedure at the time of roaming will be described.

### <S1 and S2>

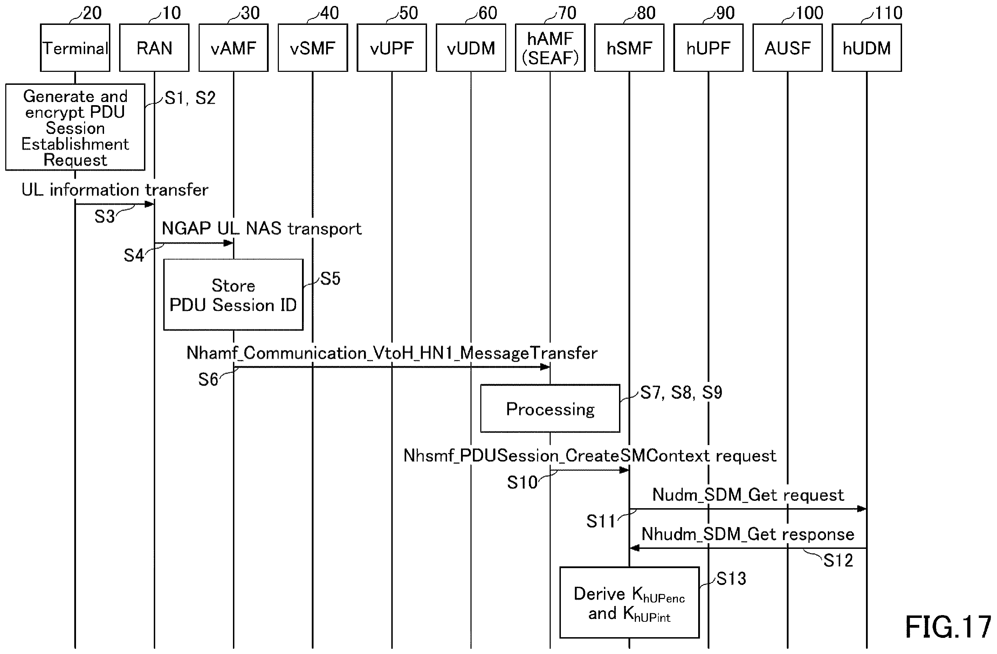

In S1 of FIG. 17, the terminal 20 generates a PDU session establishment request. The message includes a PDU session ID (allocated by the terminal 20).

In S2, the terminal 20 encrypts and integrity-protects the PDU session establishment request by hNAS security.

### <S3>

In S3, the terminal 20 transmits an UL information transfer to the RAN 10. The message includes a vNAS UL NAS transport IE. The vNAS UL NAS transport IE includes an hNAS container. The hNAS container includes the PDU session establishment request (TS 23.502, 4.3.2.2.1, step1). The vNAS UL NAS transport IE includes a PDU session ID.

### <S4 to S6>

In S4, the RAN 10 transmits an NGAP UL NAS transport to the vAMF 30. The message includes the vNAS UL NAS transport IE.

In S5, the vAMF 30 stores the PDU session ID in the VPLMN UE context of 5G- VGUTI.

In S6, the vAMF 30 transmits Nhamf_Communication_VtoH_HN1_MessageTransfer to the hAMF 70. The message includes the hNAS container and the PDU session ID.

### <S7 to S9>

In S7, the hAMF 70 stores the PDU session ID in the terminal context of the SUPI and the 5G-GUTI. In S8, the hAMF 70 decrypts and integrity-verifies the hNAS container. In S9, the hAMF 70 derives K_{hSMF} from K_{hAMF}.

### <S10>

In S10, the hAMF 70 transmits a Nhsmf_PDUSession_CreateSMContext request to the hSMF 80. The message includes the PDU session establishment request, hSMF security information, SUPI, and the PDU session ID. The hSMF security information includes terminal security capability and K_{hSMF}.

### <S11 to S13>

In S11, the hSMF 80 transmits a Nudm_SDM_Get request to the hUDM 110 using the SUPI. In S12, the hUDM 110 transmits a Nhudm_SDM_Get response to the hSMF 80. The message includes session management subscriber information. In S13, the hSMF 80 derives K_{hUPenc} and K_{hUPint} from K_{hSMF}. The K_{hUPenc} is a secret key, and the K_{hUPint} is an integrity-protected key.

### <S14 and S15>

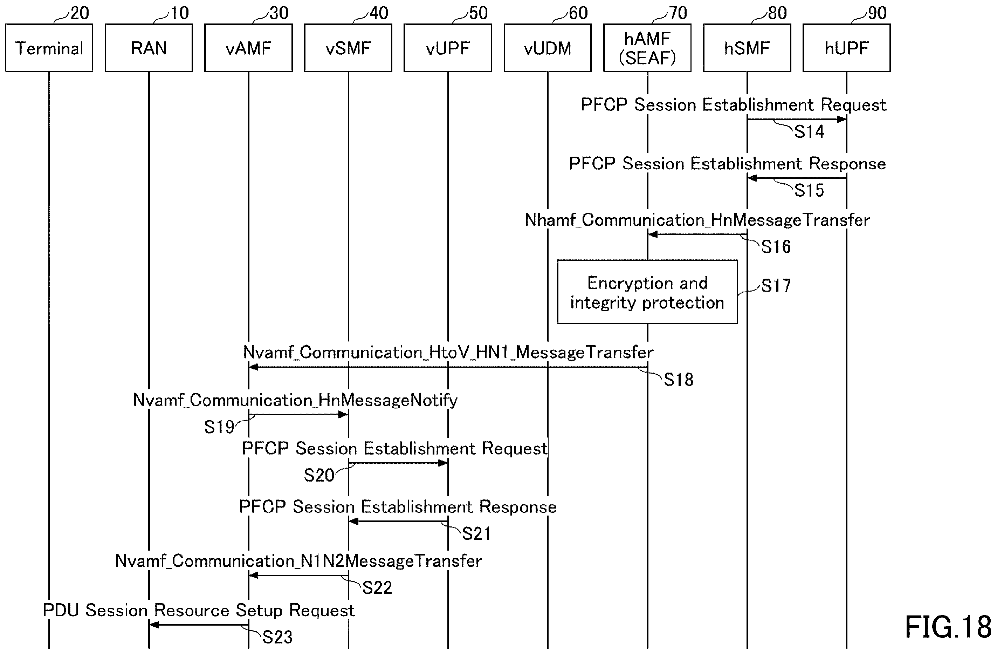

In S14 of FIG. 18, the hSMF 80 transmits a PFCP session establishment request to the hUPF 90. The message includes the UPF security information. The UPF security information includes the selected UPF security algorithm, the K_{hUPenc}, and the K_{hUPint}. In S15, the hUPF 90 transmits a PFCP session establishment response to the hSMF 80.

### <S16>

In S16, the hSMF 80 transmits Nhamf_Communication_HnMessageTransfer to the hAMF 70.

The message includes an inter-SMF container. The inter-SMF container includes a PDU session VSM context generation request IE. The IE includes content corresponding to a PDU session resource establishment request transport IE (TS 38.413, 9.3.4.1) (transmitted from the SMF to the RAN in the existing technical specification). The PDU session VSM context generation request IE includes the PDU session ID.

The Nhamf_Communication_HnMessageTransfer also includes an hNAS container. The hNAS container includes a PDU session establishment accept (TS 24.501, 8.3.2) and a UPF security mode indication. The UPF security mode indication includes the selected UPF security algorithm.

Further, the Nhamf _Communication_HnMessageTransfer includes the PDU session ID.

### <S17 and S18>

In S17, the hAMF 70 encrypts and integrity-protects the hNAS container with hNAS security.

In S18, the hAMF 70 transmits Nvamf_Communication_HtoV_HN1_MessageTransfer to the vAMF 30. The message includes the inter-SMF container, the hNAS container, and the PDU session ID.

### <S19 to S22>

In S19, the vAMF 30 transmits Nvamf_Communication_HnMessageNotify to the vSMF 40. The message includes the inter-SMF container, the hNAS container, the 5G-VGUTI, and the PDU session ID.

In S20, the vSMF 40 transmits a PFCP session establishment request to the vUPF 50. In S21, the vUPF 50 transmits a PFCP session establishment response to the vSMF 40.

In S22, the vSMF 40 transmits Nvamf_Communication_N1N2MessageTransfer to the vAMF 30. The message includes the PDU session resource establishment request transport IE (TS 38.413, 9.3.4.1), the hNAS container, and the PDU session ID.

### <S23>

In S23, the vAMF30 sends a PDU session resources establishment request (TS 38.413, 9.2.1.1) to RAN10. The message includes the PDU session resource establishment request transport IE (TS 38.413, 9.3.4.1) and a vNAS DL NAS transport IE. The vNAS DL NAS transport IE also includes the hNAS container.

### <S24 and S25>

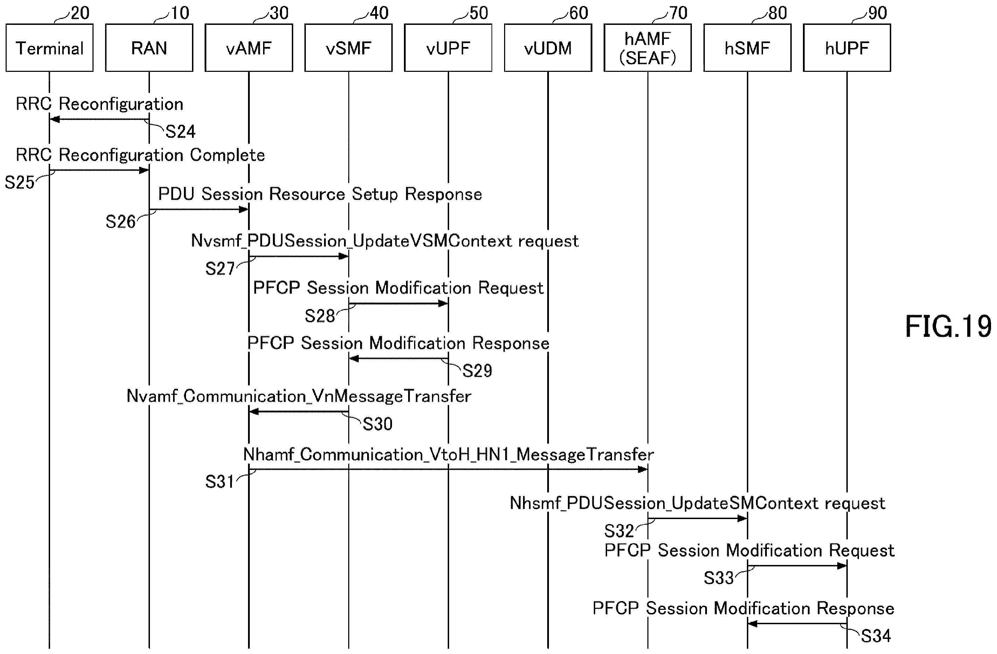

In S24 of FIG. 19, the RAN 10 transmits an RRC reconfiguration to the terminal 20 (TS 38.331, 5.3.5.1). The message includes the vNAS DL NAS transport IE.

In S25, the terminal 20 transmits an RRC reconfiguration complete to the RAN 10 (TS 38.331, 5.3.5.1). The message includes a vNAS UL NAS transport IE. The IE includes the hNAS container. The hNAS container includes the UPF security mode complete. The RRC reconfiguration complete includes the PDU session ID.

### <S26>

In S26, RAN10 sends a PDU session resources establishment response (TS 38.413, 9.2.1.3) to vAMF30. The message includes a PDU session resource establishment response transmission IE (TS 38.413, 9.3.4.2) and a vNAS UL NAS transport IE.

### <S27>

In S27, the vAMF 30 transmits an Nvsmf_PDUSession_UpdateVSMContext request to the vSMF 40. The message includes the PDU session resource establishment response transport IE (TS 38.413, 9.3.4.2), the hNAS container, and the PDU session ID.

### <S28 and S29>

In S28, the vSMF 40 transmits a PFCP session modification request to the vUPF 50. In S29, the vUPF 50 transmits a PFCP session modification response to the vSMF 40.

### <S30>

In S30, the vSMF 40 transmits Nvamf_Communication_VnMessageTransfer to the vAMF 30. The message includes the inter-SMF container. The inter-SMF container includes the PDU session VSM context generation response IE. The PDU session VSM context generation response IE includes content corresponding to the PDU session resource establishment response transport IE (TS 38.413, 9.3.4.2). The PDU session VSM context generation response IE includes the PDU session ID.

The Nvamf_Communication_VnMessageTransfer also includes the hNAS container. The Nvamf_Communication_VnMessageTransfer includes the PDU session ID.

### <S31 to S34>

In S31, the vAMF 30 transmits Nhamf_Communication_VtoH_HN1_MessageTransfer to the hAMF 70. The message includes the inter-SMF container, the hNAS container, and the PDU session ID.

In S32, the hAMF 70 transmits an Nhsmf_PDUSession_UpdateSMContext request to the hSMF 80. The message includes the inter-SMF container, the hNAS container, and the PDU session ID.

In S33, the hSMF 80 transmits a PFCP session modification request to the hUPF 90. In S34, the hUPF 90 transmits a PFCP session modification response to the hSMF 80.

The PDU session establishment procedure at the time of roaming is completed as described above.

### (Summary of Messages between vAMF 30 and hAMF 70)

A summary of messages between the vAMF 30 and the hAMF 70 used in the procedure described above is set forth below.

### •Nhamf_Communication_VtoH_HN1_MessageTransf er

This message is vAMF 30 originated and hAMF 70 terminated, and is a message carrying a signal of VPLMN NF originated-HPLMN NF terminated, or an hNAS signal.

### •Nvamf_Communication_HtoV_HN1_MessageTransf er

This message is hAMF 70 originated and vAMF 30 terminated, and is a message carrying a signal of HPLMN NF originated-VPLMN NF terminated, or an hNAS signal.

### •Nhamf_Communication_VnMessageNotify

This message is hAMF 70 originated and HPLMN NF terminated, and is a message carrying a signal arriving from the VPLMN NF.

### •Nvamf_Communication_HnMessageNotify

This message is vAMF 30 originated and VPLMN NF terminated, and is a message carrying a signal arriving from the HPLMN NF.

### • Nhamf_Communication_HnMessageTransfer

This message is HPLMN NF originated and hAMF terminated, and is a message carrying a signal of HPLMN NF originated-VPLMN NF terminated.

### •Nvamf_Communication_VnMessageTransfer

This message is VPLMN NF originated and vAMF 30 terminated, and is a message carrying a signal of VPLMN NF originated-HPLMN NF terminated.

### (Terminal Originated Service Request Procedure at Time of Roaming)

Next, a terminal originated service request procedure at the time of roaming will be described. This procedure is completed in the VPLMN.

### <S1>

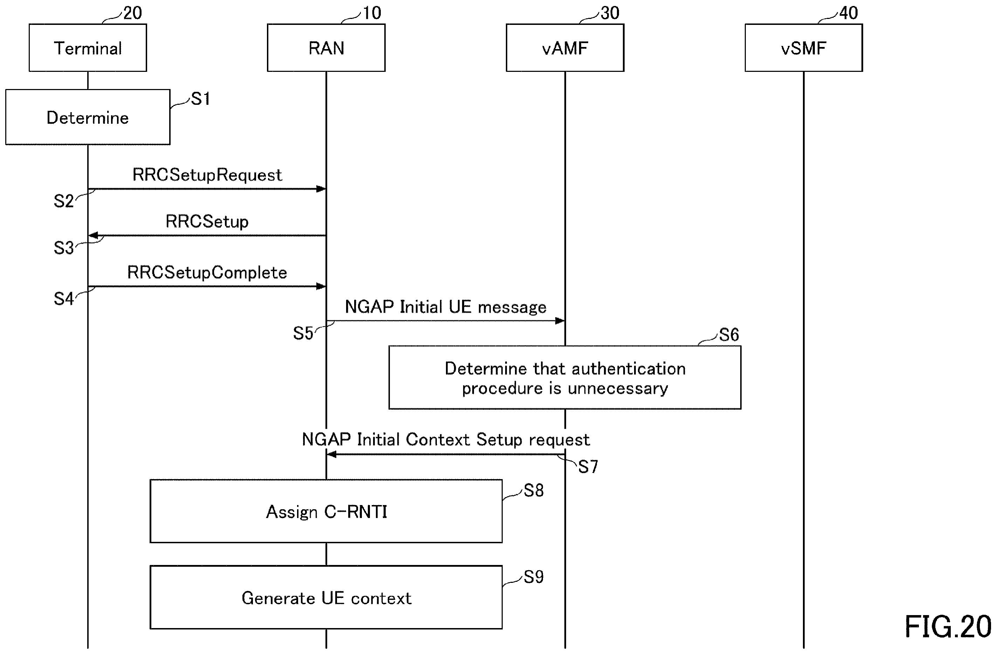

In S1 of FIG. 20, the terminal 20 determines to transmit a service request to the vAMF 30 using the initial NAS message protection mechanism (TS 23.502, 4.2.3.2, step1) (TS 33.501, 6.4.6, step1).

The service request message is in plaintext and includes only 5G-VS-TMSI and the ngKSI. This message will be referred to as "service request (initial NAS part)" hereinafter. The message is a vNAS (=NAS message terminated at the vAMF 30).

The value of the ngKSI is a value that was previously allocated by the hAMF 70 and stored by the vAMF 30 in the VPLMN terminal context. With respect to the 5G-VS-TMSI, the 5G-VS-TMSI is derived from the 5G-VGUTI in the same manner as the 5G-S-Temporary Mobile Subscriber Identity (5G-S-TMSI) is derived from the 5G-GUTI.

### <S2 to S4>

In S2, the terminal 20 transmits RRCSetupRequest to the RAN 10 (TS 38.331, 5.3.3.1). In S3, the RAN 10 transmits RRCSetup to the terminal 20 (TS 38.331, 5.3.3.1). In S4, the terminal 20 transmits RRCSetupComplete to the RAN 10 (TS 38.331, 5.3.3.1). The RRCSetupComplete message includes the service request (initial NAS part).

### <S5 and S6>

In S5, the RAN 10 selects the vAMF 30 according to the value of 5G-VS-TMSI and transmits an NGAP initial UE message to the vAMF 30 (TS 38.413, 8.6.1.2). The message includes the registration request (initial NAS part).

In S6, the vAMF 30 determines that the authentication procedure is not needed because the value of ngKSI in the service request (initial NAS part) matches the value of ngKSI in the VPLMN terminal context of 5G-VGUTI corresponding to 5G-VS-TMSI.

### [Security Configuration Part: S7 to S9]

The security configuration part will be described in S7 to S9.

### <S7 to S9>

In S7, the vAMF 30 transmits to the RAN 10 an NGAP Initial Context Setup request (TS 38.413, 9.2.2.1). The message includes K_{gNB} and terminal security capability.

In S8, the RAN 10 assigns a C-RNTI to the terminal 20. In S9, the RAN 10 generates a UE context for the C-RNTI.

### [AS Security Configuration Part: S10 to S12]

The AS security configuration part will be described in S10 to S12.

### <S10 to S12>

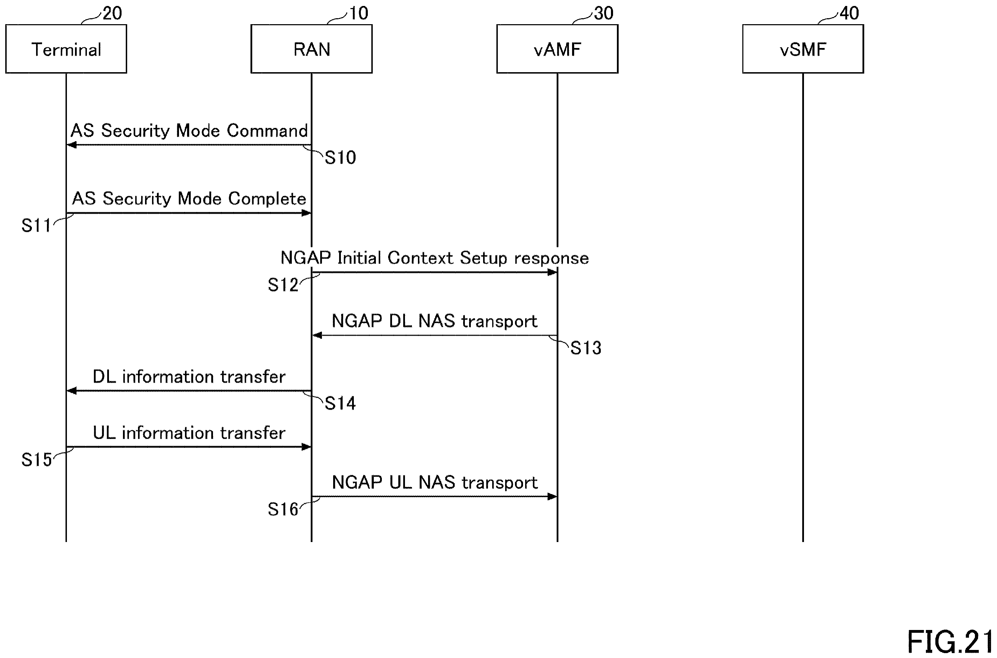

In S10 of FIG. 21, the RAN 10 transmits an AS security mode command to the terminal 20 (TS 33.501, 6.7.4, step1b). The message includes a selected AS security algorithm.

In S11, the terminal 20 transmits an AS security mode complete to the RAN 10 (TS 33.501, 6.7.4, step2b). In S12, the RAN 10 transmits an NGAP Initial Context Setup response (TS 38.413, 9.2.2.2) to the vAMF 30.

### [vNAS Security Configuration Part: S13 to S16]

In S13 to S16, the vNAS security configuration part will be described.

### <S13 and S14>

In S13, the vAMF 30 transmits an NGAP DL NAS transport to the RAN 10. The message includes a vNAS security mode command (TS 33.501, 6.7.2, step1b). The command includes the terminal security capability and the selected vNAS security algorithm.

In S14, the RAN 10 transmits a DL information transfer to the terminal 20. The message includes the vNAS security mode command (TS 33.501, 6.7.2, step1b).

### <S15 and S16>

In S15, the terminal 20 transmits an UL information transfer to the RAN 10. The message includes a vNAS security mode complete (TS 33.501, 6.7.2, step2b). The vNAS security mode complete includes all pieces of information of the service request. That is, the service request (initial NAS part) and the service request (vNAS part) are included.

In S16, the RAN 10 transmits an NGAP UL NAS transport to the vAMF 30. The message includes the vNAS security mode complete (TS 33.501, 6.7.2, step2b).

### [Route activation part: S17 to S27]

The route activation part is described in S17 to S27.

### <S17 to S20>

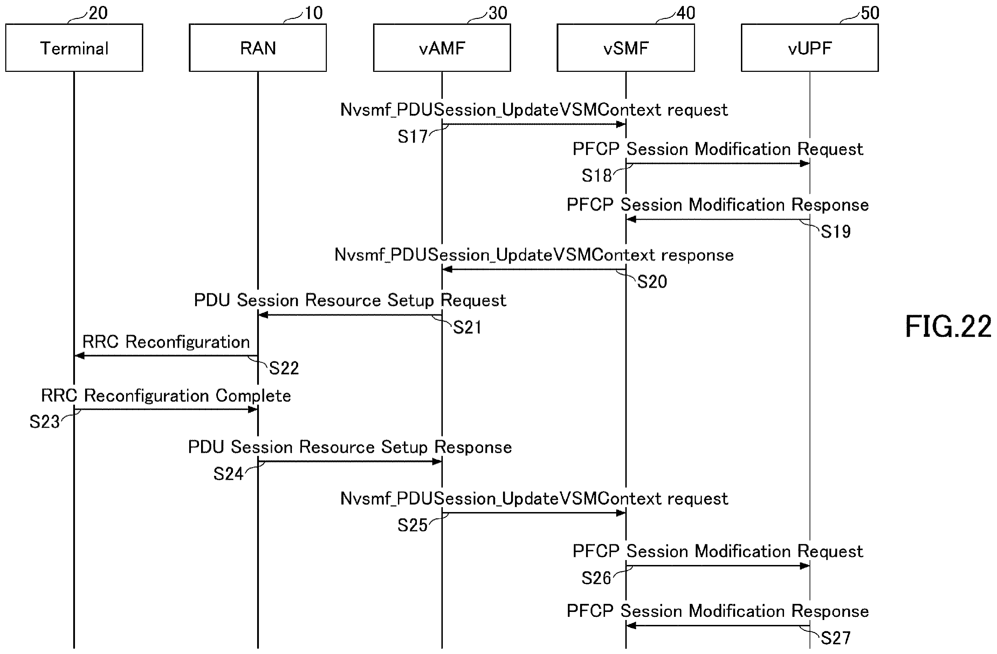

In S17 of FIG. 22, the vAMF 30 transmits a Nvsmf_PDUSession_UpdateVSMContext request to the vSMF 40 (TS 23.502, 4.2.3.2, step4).

In S18, the vSMF 40 transmits a PFCP session modification request to the vUPF 50. In S19, the vUPF 50 transmits a PFCP session modification response to the vSMF 40.

In S20, the vSMF 40 transmits a Nvsmf_PDUSession_UpdateVSMContext response to the vAMF 30 (TS 23.502, 4.2.3.2, step11). The message includes a PDU session resource establishment request transport IE (TS 38.413, 9.3.4.1) and vNAS SM information. The vNAS SM information includes service permission.

### <S21 to S24>

In S21, the vAMF 30 transmits a PDU session resources establishment request (TS 38.413, 9.2.1.1) to the RAN 10 (TS 23.502, 4.2.3.2, step12). The message includes the PDU session resource establishment request transport IE (TS 38.413, 9.3.4.1) and a vNAS DL NAS transport IE. The vNAS DL NAS transport IE includes the vNAS SM information.

In S22, the RAN 10 transmits RRC reconfiguration to the terminal 20 (TS 38.331, 5.3.5.1). The message includes the vNAS DL NAS transport IE.

In S23, the terminal 20 transmits RRC reconfiguration complete to the RAN 10 (TS 38.331, 5.3.5.1). In S24, the RAN 10 transmits a PDU session resources establishment response (TS 38.413, 9.2.1.3) to the vAMF 30 (TS 23.502, 4.2.3.2, step14). The message includes a PDU session resource establishment response transport IE (TS 38.413, 9.3.4.2).

### <S25 to S27>

In S25, the vAMF 30 transmits a Nvsmf_PDUSession_UpdateVSMContext request to the vSMF 40 (TS 23.502, 4.2.3.2, step15). The message includes the PDU session resource establishment response transport IE (TS 38.413, 9.3.4.2).

In S26, the vSMF40 transmits a PFCP session modification request to the vUPF 50. In S27, the vUPF 50 transmits a PFCP session modification response to the vSMF 40.

The terminal originated service request procedure at the time of roaming is completed as described above.

### (UL Data Transmission Using PDU Session at Time of Roaming)

Next, UL data transmission using a PDU session at the time of roaming will be described.

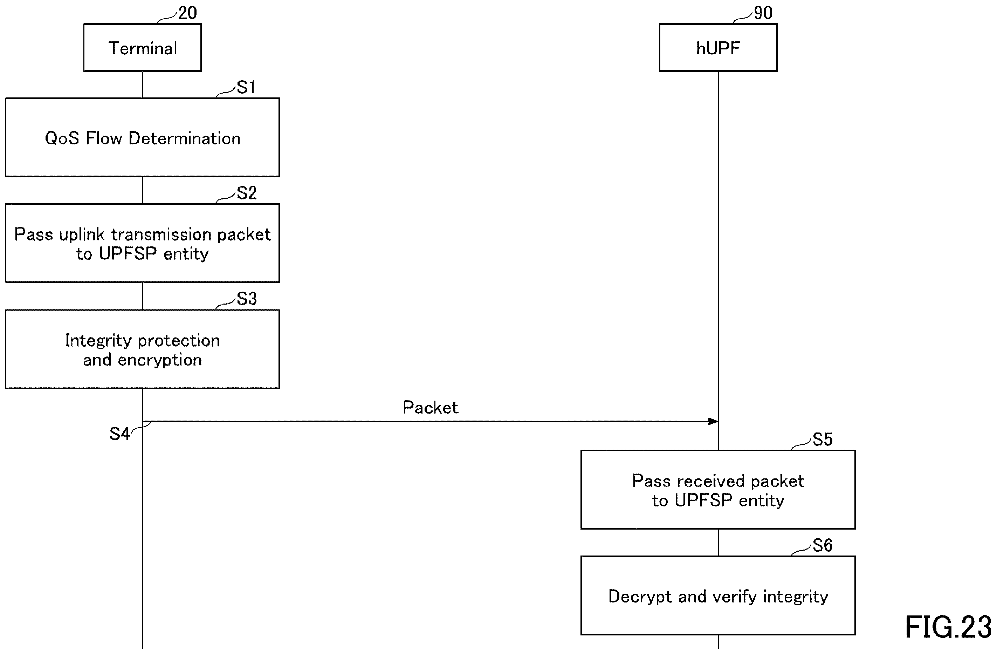

In S1 of FIG. 23, the terminal 20 apply an UL transmission packet to a packet filter, and determine a QoS flow through which the UL transmission packet are to be passed.

In S2, the terminal 20 passes the UL transmission packet to an UPFSP entity in the terminal. In S3, the UPFSP entity in the terminal integrity-protects and encrypts the UL transmission packet, except for 5tuple, and passes it to an SDAP entity in the terminal. Thereafter, in S4, the terminal 20 transmits the UL packet.

In S5, the hUPF 90 receives the UL transmission packet, and an SDAP entity in the UPF passes the received packet to an UPFSP entity in the UPF. In S6, the UPFSP entity in the UPF decrypts and integrity-verifies the packet and returns it to the QoS flow. Thereafter, the existing processing is performed.

The UL data transmission using the PDU session at the time of roaming is completed as described above.

### (DL Data Transmission Using PDU Session at Time of Roaming)

Next, DL data transmission using a PDU session at the time of roaming will be described.

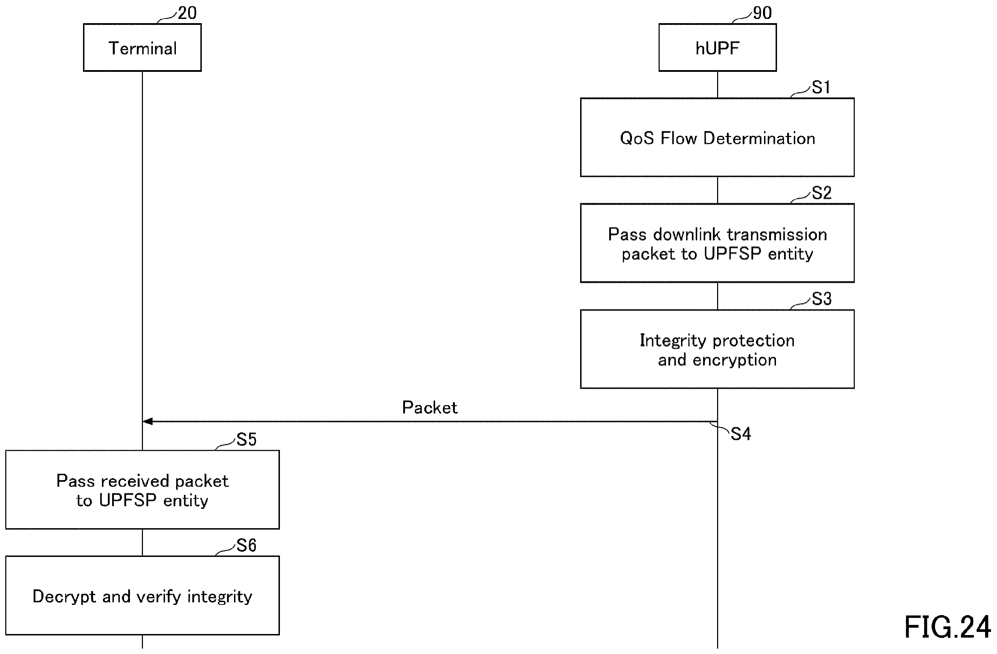

In S1 of FIG. 24, the hUPF 90 applies a DL transmission packet to a packet filter and determines a QoS flow through which the DL transmission packet is to be passed.

In S2, the hUPF 90 passes the DL transmission packet to a UPFSP entity in the UPF. In S3, the UPFSP entity in the UPF integrity-protects and encrypts the UL transmission packet, except for 5tuple, and passes it to an SDAP entity in the UPF. Then, in S4, the hUPF 90 transmits the DL packet.

In S5, the terminal 20 receive the DL transmission packet and an SDAP entity in the terminal passes the received packet to an UPFSP entity in the terminal. In S6, the UPFSP entity in the terminal decrypts and integrity-verifies the packet. Thereafter, the existing processing is performed.

The DL data transmission using the PDU session at the time of roaming is completed as described above.

According to the first embodiment described above, even when the HPLMN does not trust the VPLMN, the terminal 20 can perform communication safely at the time of roaming. Next, a second embodiment will be described.

### (Problem of Second Embodiment)

In 5GS, (i) SMS over NAS (TS 23.502, 4.13.3), (ii) C-plane CIoT 5GS optimization UPF anchor data transport (TS 23.502, 4.24), and (iii) NEF based non-IP data transport (TS 23.502, 4.25) have been specified as transport schemes for small user data. These have the following problems with respect to roaming.

As for (i), there is no technical specification of roaming architecture in the first place.

As for (ii) and (iii), concealment and integrity protection are performed between the terminal and the AMF (located in the VPLMN), but it is not secure under the assumption that "the HPLMN does not trust the VPLMN".

In the first embodiment, the secure roaming architecture has been described under the assumption that "the HPLMN does not trust the VPLMN". The following describes whether the roaming architecture of the first embodiment operates properly when applied to the above (i), (ii), and (iii).

(i) As described in the first embodiment, the AMF in the existing non-roaming architecture specification is configured to be separated into the vAMF 30 and the hAMF 80, and thus it is possible to easily configure a secure roaming architecture.
(ii) The terminal 20 cannot decode the DL user small data. The hUPF 90 cannot decode the UL user small.
(iii) The roaming architecture of the existing specification is not used. By separating the AMF in the existing non-roaming architecture specification into the vAMF 30 and the hAMF 70, a secure roaming architecture can be easily configured.

In order to construct a secure roaming architecture for (ii), the above problem needs to be solved. In the second embodiment, a technique for solving this problem will be described. Note that the technique according to the second embodiment is applicable not only to roaming.

### (Overview of Second Embodiment)

In the second embodiment, when establishing a PDU session, the hSMF 80 determines whether the PDU session is for the "C-plane CIoT 5GS optimization UPF anchor data transmission" or for the "NEF-based non-IP data transmission", and notifies the terminal 20 of the determination result. The terminal 20, for the hUPF 90 in the former case and for the hAMF 70 in the latter case, conceals and integrity-protects the user small data.

That is, in the second embodiment, the terminal 20 receives an identifier, included in the PDU session establishment accept message, indicating whether the PDU session is for the "C-plane CIoT 5GS optimization UPF-anchor data transmission" or for the "NEF-based non-IP data transmission", and, the terminal 20, for the hUPF 90 in the former case and for the hAMF 70 in the latter case, conceals and integrity-protects the user small data. That is, for the terminal 20, the communication partner of the user small data that is subjected to the concealment and integrity protection is the hUPF 90 in the former case, and the communication partner of the user small data that is subjected to the concealment and integrity protection is the hAMF 70 in the latter case.

### (PDU session establishment procedure at the time of roaming)

First, a PDU session establishment procedure during roaming will be described.

### <S1 and S2>

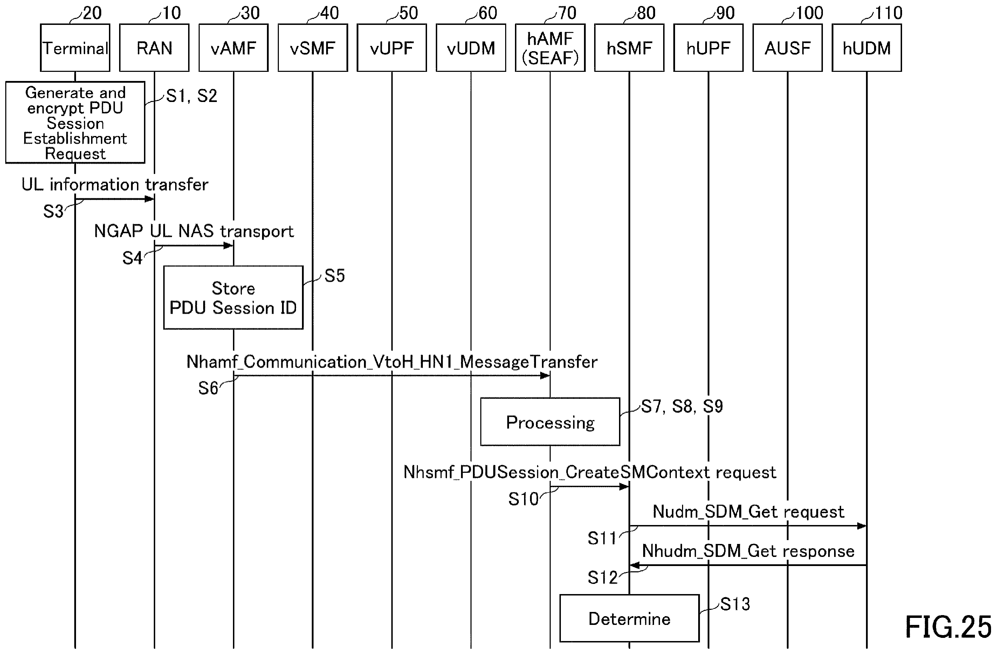

In S1 of FIG. 25, the terminal 20 generates a PDU session establishment request. The message includes a PDU session ID (allocated by the terminal). In S2, the terminal 20 encrypts and integrity-protects the PDU session establishment request by hNAS security.

### <S3>

In S3, the terminal 20 transmits an UL information transfer to the RAN 10. The message includes a vNAS UL NAS transport IE. The vNAS UL NAS transport IE includes an hNAS container. The hNAS container includes a PDU session establishment request (TS 23.502, 4.3.2.2.1, step1). The vNAS UL NAS transport IE includes a PDU session ID.

### <S4 to S6>

In S4, the RAN 10 transmits an NGAP UL NAS transport to the vAMF 30. The message includes the vNAS UL NAS transport IE.

In S5, the vAMF 30 stores the PDU session ID in the VPLMN terminal context of 5G-VGUTI.

In S6, the vAMF 30 transmits Nhamf_Communication_VtoH_HN1_MessageTransfer to the hAMF 70. The message includes the hNAS container and the PDU session ID.

### <S7 to S9>

In S7, the hAMF 70 stores the PDU session ID in the terminal context of SUPI and 5G-GUTI. In S8, the hAMF 70 decrypts and integrity-verifies the hNAS container. In S9, the hAMF 70 derives K_{hSMF} from K_{hAMF}.

### <S10>

In S10, the hAMF 70 transmits a Nhsmf_PDUSession_CreateSMContext request to the hSMF 80. The message includes the PDU session establishment request, hSMF security information, SUPI, the PDU session ID, and a C-plane CIoT indication.

The hSMF security information includes a terminal security capability and K_{hSMF}. Note that the hAMF 70 determines whether or not to set the C-plane CIoT indication (i.e., cpCiotEnabled=true, cpOnlyInd=true) (TS 29.502, 6.1.6.2.2) in consideration of subscriber information and the like.

### <S11 to S13>

In S11, hSMF80 transmits a Nudm_SDM_Get request to the hUDM 110 using the SUPI. In S12, the hUDM 110 transmits a Nhudm_SDM_Get response to the hSMF 80. The message includes session management subscriber information. The session management subscriber information may include an NEF identifier for NIDD.

In S13, the hSMF 80 determines which of the C-plane CIoT 5GS optimization UPF anchor data transmission and the NEF based non-IP data transmission is used in consideration of the NEF identifier for NIDD and the like.

### (For C-Plane CIoT 5GS Optimization UPF Anchor Data Transmission)

The operation when using C-plane CIoT 5GS optimization UPF anchor data transmission is as follows.

### <S14 to S16>

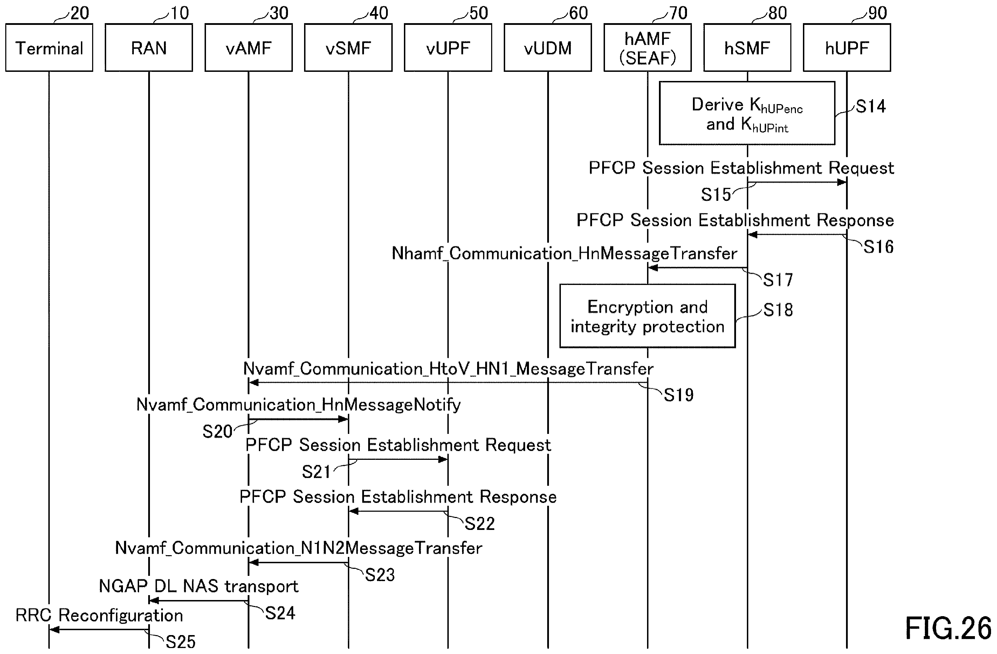

In S14 of FIG. 26, the hSMF 80 derives K_{hUPenc} and K_{hUPint} from K_{hSMF}. In S15, the hSMF 80 transmits a PFCP session establishment request to the hUPF 90. The message includes UPF security information. The UPF security information includes a selected UPF security algorithm, K_{hUPenc}, and K_{hUPint}. In S16, the hUPF 90 transmits a PFCP session establishment response to the hSMF 80.

### <S17>

In S17, the hSMF 80 transmits Nhamf_Communication_HnMessageTransfer to the hAMF 70. The message includes an inter-SMF container. The inter-SMF container includes a PDU session VSM context generation request IE.

The PDU session VSM context generation request IE includes content corresponding to the PDU session resource establishment request transport IE (TS 38.413, 9.3.4.1) (transmitted from the SMF to the RAN in the existing technical specification). The PDU session VSM context generation request IE includes the PDU session ID. The PDU session VSM context generation request IE includes the C-plane CIoT indication (UPF anchor indication).

The Nhamf_Communication_HnMessageTransfer includes an hNAS container. The hNAS container includes a PDU session establishment accept (TS 24.501, 8.3.2) and a UPF security mode indication. The PDU session establishment accept includes a C-plane only indication (UPF anchor indication). The UPF security mode indication includes the selected UPF security algorithm.

The Nhamf_Communication_HnMessageTransfer includes the PDU session ID.

### <S18 to S20>

In S18, the hAMF 70 encrypts and integrity-protects the hNAS container by hNAS security.

In S19, the hAMF 70 transmits Nvamf_Communication_HtoV_HN1_MessageTransfer to the vAMF 30. The message includes the inter-SMF container, the hNAS container, and the PDU session ID.

In S20, the vAMF 30 transmits Nvamf_Communication_HnMessageNotify to the vSMF 40. The message includes the inter-SMF container, the hNAS container, a 5G-VGUTI, and the PDU session ID.

### <S21 to S23>

In S21, the vSMF 40 transmits a PFCP session establishment request to the vUPF 50. In S22, the vUPF 50 transmits a PFCP session establishment response to the vSMF 40.

In S23, the vSMF 40 transmits Nvamf_Communication_N1N2MessageTransfer to the vAMF 30. The message includes the hNAS container and the PDU session ID.

### <S24 to S25>

In S24, the vAMF 30 transmits an NGAP DL NAS transport (TS 38.413, 9.2.5.2) to the RAN 10. The message includes a vNAS DL NAS transport IE. The vNAS DL NAS transport IE includes the hNAS container.

In S25, the RAN 10 transmits RRC reconfiguration to the terminal 20 (TS 38.331, 5.3.5.1). The message includes the vNAS DL NAS transport IE.

### <S26>

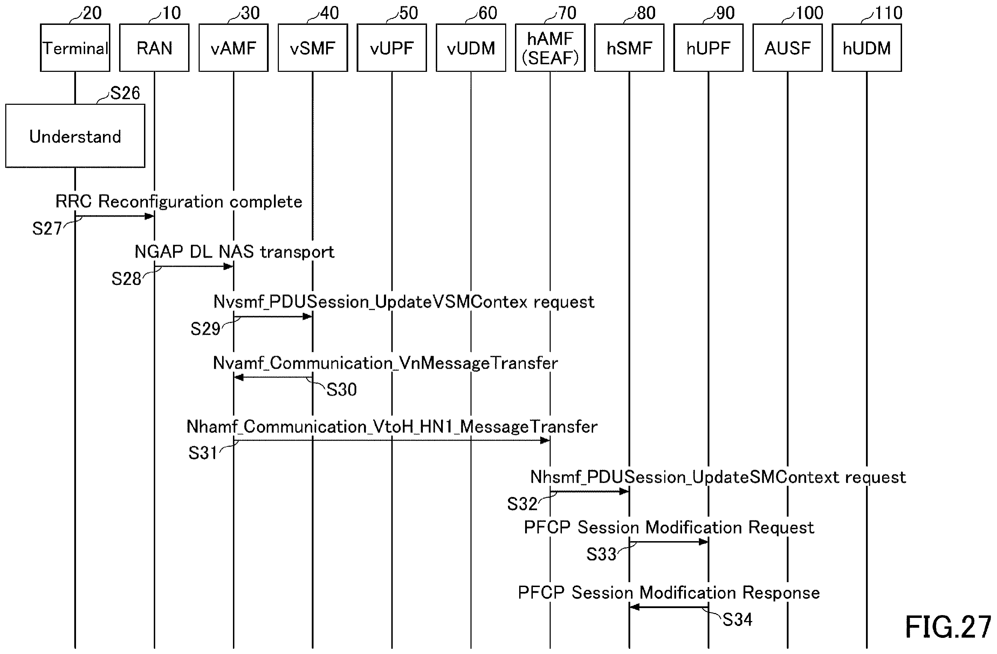

In S26 of FIG. 27, since there is only the C-plane indication (UPF anchor indication), the terminal understands (assumes) that the terminal 20 processes the CIoT user data container as the vNAS container and performs the concealment and integrity-protection processes according to the UPF security mode indication.

### <S27>

In S27, the terminal 20 transmits RRC reconfiguration complete to the RAN 10 (TS 38.331, 5.3.5.1). The message includes a vNAS UL NAS transport IE. The vNAS UL NAS transport IE includes an hNAS container. The hNAS container includes a UPF security mode complete. The RRC reconfiguration complete message includes the PDU session ID.

### <S28 and S29>

In S28, the RAN 10 transmits an NGAP UL NAS transport (TS 38.413, 9.2.5.3) to the vAMF 30. The message includes the vNAS UL NAS transport IE.

In S29, the vAMF 30 transmits a Nvsmf_PDUSession_UpdateVSMContext request to the vSMF 40. The message includes the hNAS container and the PDU session ID.

### <S30>

In S30, the vSMF 40 transmits Nvamf_Communication_VnMessageTransfer to the vAMF 30. The message includes an inter-SMF container. The inter-SMF container includes a PDU session VSM context generation response IE. The PDU session VSM context generation response IE includes content corresponding to the PDU session resource establishment response transport IE (TS 38.413, 9.3.4.2). The PDU session VSM context generation response IE includes the PDU session ID.

The message of the Nvamf_Communication_VnMessageTransfer includes the hNAS container. The Nvamf_Communication_VnMessageTransfer includes the PDU session ID.

### <S31 to S34>

In S31, the vAMF 30 transmits Nhamf_Communication_VtoH_HN1_MessageTransfer to the hAMF 70. The message includes the inter-SMF container, the hNAS container, and the PDU session ID.

In S32, the hAMF 70 transmits a Nhsmf_PDUSession_UpdateSMContext request to the hSMF 80. The message includes the inter-SMF container, the hNAS container, and the PDU session ID.

In S32, the hSMF 80 transmits a PFCP session modification request to the hUPF. In S36, the hUPF 90 transmits a PFCP session modification response to the hSMF 80.

The PDU session establishment procedure at the time of roaming is completed as described above.

### (For NEF-Based Non-IP Data Transmission)

Next, a case of using NEF-based non-IP data transmission will be described.

### <S14 and S15>

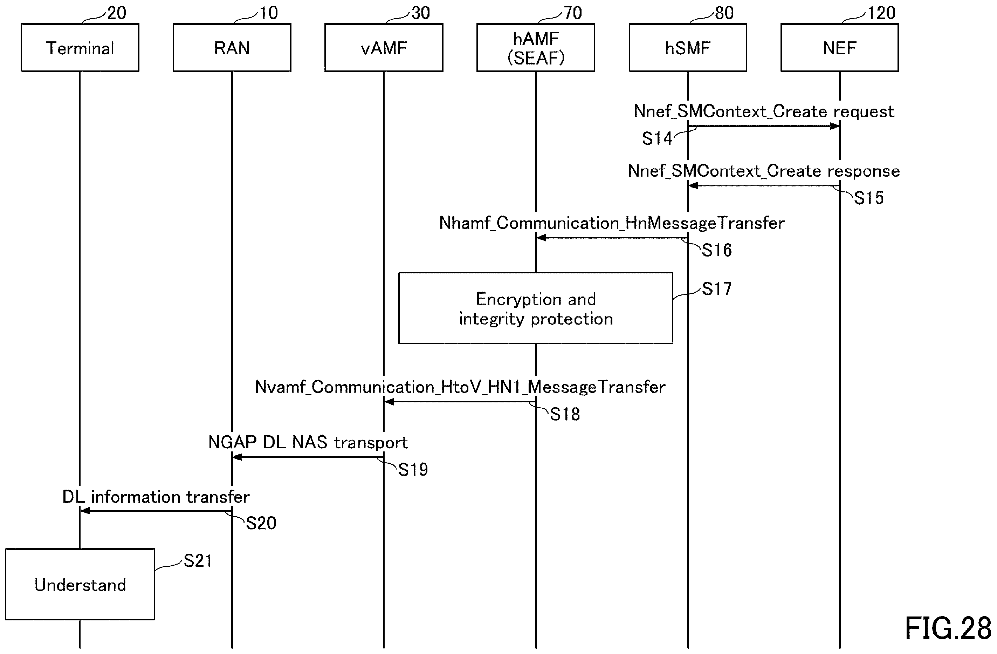

In S14 of FIG. 28, the hSMF 80 transmits an Nnef_SMContext_Create request to the NEF 120 (TS 23.502, 4.25.2, step2). In S15, the NEF 120 transmits an Nnef_SMContext_Create response to the hSMF 80 (TS 23.502, 4.25.2, step3).

### <S16>

In S16, the hSMF 80 transmits Nhamf_Communication_HnMessageTransfer to the hAMF 70. The message includes an hNAS container. The hNAS container includes the PDU session establishment accept (TS 24.501, 8.3.2). The PDU session establishment accept includes a C-plane only indication (NEF anchor indication).

The message of Nhamf_Communication_HnMessageTransfer includes the PDU session ID.

### <S17 and S18>

In S17, the hAMF 70 encrypts and integrity-protects the hNAS container by hNAS security. In S18, the hAMF 70 transmits Nvamf_Communication _HtoV_HN1_MessageTransfer to the vAMF 30. The message includes the hNAS container and the PDU session ID.

### <S19, S20 and S21>

In S19, the vAMF 30 transmits an NGAP DL NAS transport (TS 38.413, 9.2.5.2) to the RAN 10. The message includes a vNAS DL NAS transport IE. The IE includes the hNAS container.

In S20, the RAN 10 transmits DL information transfer to the terminal 20 (TS 38.331, 5.7.1.1). The message includes the vNAS DL NAS transport IE.

In S21, the terminal 20 understands (assumes) that the terminal 20 processes the CIoT user data container as the hNAS container after that since there is the C-plane only indication (NEF anchor indication).

The PDU session establishment procedure at the time of roaming is completed as described above.

### (C-Plane CIoT 5GS Optimization UPF Anchor Data Transmission)

The C-plane CIoT 5GS optimization UPF anchor data transmission of the present embodiment is similar to TS 23.502, 4.24.1 in the case of the terminal origination. However, the vAMF is used instead of the AMF. In the case of terminal incoming, the same procedure as in TS 23.502 and 4.24.2 is performed. However, the vAMF is used instead of the AMF.

In the C-plane CIoT 5GS optimization UPF anchor data transmission, the terminal 20 conceals and integrity-protects the user small data for the hUPF 90. That is, in the terminal 20, the communication partner of the user small data that is subjected to the concealment and integrity protection is the hUPF 90.

### (NEF-Based Non-IP Data Transmission-Terminal Origination)

Next, a case of terminal origination in NEF-based non-IP data transmission will be described.

### <S1 and S2>

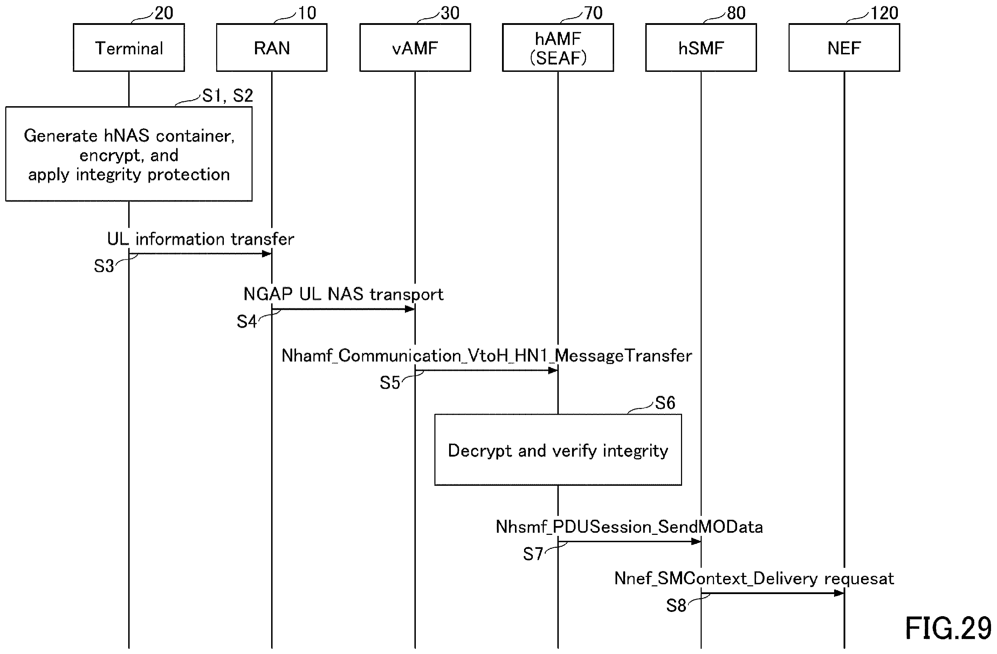

In S1 of FIG. 29, the terminal 20 generates an hNAS container. The hNAS container includes a CIoT user data container. In S2, the terminal 20 encrypts and integrity-protects the hNAS container by hNAS security.

### <S3 to S5>

In S3, the terminal 20 transmits UL information transfer to the RAN 10. The message includes a vNAS UL NAS transport IE. The vNAS UL NAS transport IE includes the hNAS container and the PDU session ID.

In S4, the RAN 10 transmits an NGAP UL NAS transport to the vAMF 30. The message includes the vNAS UL NAS transport IE.

In S5, the vAMF 30 transmits Nhamf_Communication_VtoH_HN1_MessageTransfer to the hAMF 70. The message includes the hNAS container and the PDU session ID.

### <S6 to S8>

In S6, the hAMF 70 decrypts and integrity-verifies the hNAS container. In S7, the hAMF 70 transmits Nhsmf_PDUSession_SendMOData to the hSMF 80 (TS 23.502, 4.25.4, step1). The message includes a CIoT user data container and the PDU session ID.

In S8, the hSMF 80 transmits to the NEF 120 a Nnef_SMContext_Delivery request (TS 23.502, 4.25.4, step3). The message includes the CIoT user data container and the PDU session ID.

The NEF-based non-IP data transmission (terminal origination) is completed as described above.

### (NEF-Based Non-IP Data Transmission-Terminal Incoming)

Next, a case of terminal incoming in NEF-based non-IP data transmission will be described.

### <S1 and S2>

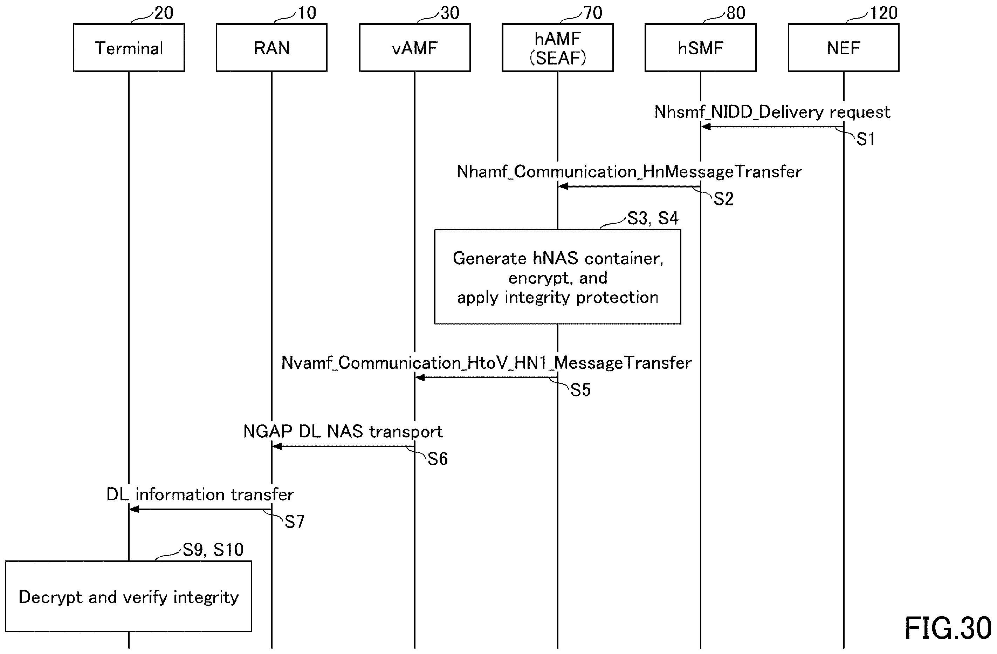

In S1 of FIG. 30, the NEF 120 transmits a Nhsmf_NIDD_Delivery request to the hSMF 80 (TS 23.502, 4.25.5, step3). The URI of the message includes a PDU session reference number. The PDU session reference number is previously provided by the SMF to the NEF. The Nhsmf_NIDD_Delivery request message includes a CIoT user information container.

In S2, the hSMF 80 transmits Nhamf_Communication_HnMessageTransfer to the hAMF 70. The message includes the CIoT user data container and the PDU session ID.

### <S3 and S4>

In S3, the hAMF 70 generates an hNAS container. The hNAS container includes the CIoT user data container. In S4, the hAMF 70 encrypts and integrity-protects the hNAS container with hNAS security.

### <S5 and S6>

In S5, the hAMF 70 transmits Nvamf_Communication_HtoV_HN1_MessageTransfer to the vAMF 30. The message includes the hNAS container and the PDU session ID.

In S6, the vAMF 30 transmits an NGAP DL NAS transport (TS 38.413, 9.2.5.2) to the RAN 10. The message includes the vNAS DL NAS transport IE. The IE includes the hNAS container and the PDU session ID.

### <S7 to S10>

In S7, the RAN 10 transmits DL information transfer to the terminal 20 (TS 38.331, 5.7.1.1). The message includes the vNAS DL NAS transport IE.

In S9, the terminal 20 decrypts and integrity-verifies the vNAS DL NAS transport IE with vNAS security. In S10, the terminal 20 decrypts and integrity-verifies the hNAS container with hNAS security.

The NEF-based non-IP data transmission (terminal incoming) is completed.

According to the second embodiment described above, even when the HPLMN does not trust the VPLMN, the terminal 20 can safely transmit the user small data.

Note that, as described in the second embodiment, the technology in which the terminal 20 receives the identifier indicating whether the PDU session is for the "C-plane CIoT 5GS optimization UPF-anchor data transfer" or for the "NEF-based non-IP data transfer" included in the PDU session establishment accept message, and determines the counterpart apparatus (e.g., UPF, AMF) for confidentiality and integrity protection of the user small data based on the identifier, is not limited to the time of roaming, and can also be applied to the time of non-roaming. Furthermore, the technology according to the second embodiment can also be applied to a user small-data transmission scheme (e.g., a new transmission scheme that will appear in the future) other than the "C-plane CIoT 5GS optimization UPF anchor-data transmission" and the "NEF-based non-IP datatransmission".

### (Apparatus Configuration)

Next, an example of a functional configuration of the network node apparatus 5 and the terminal 20 that perform the processing and operation described above will be described.

### <Network Node Apparatus 5>

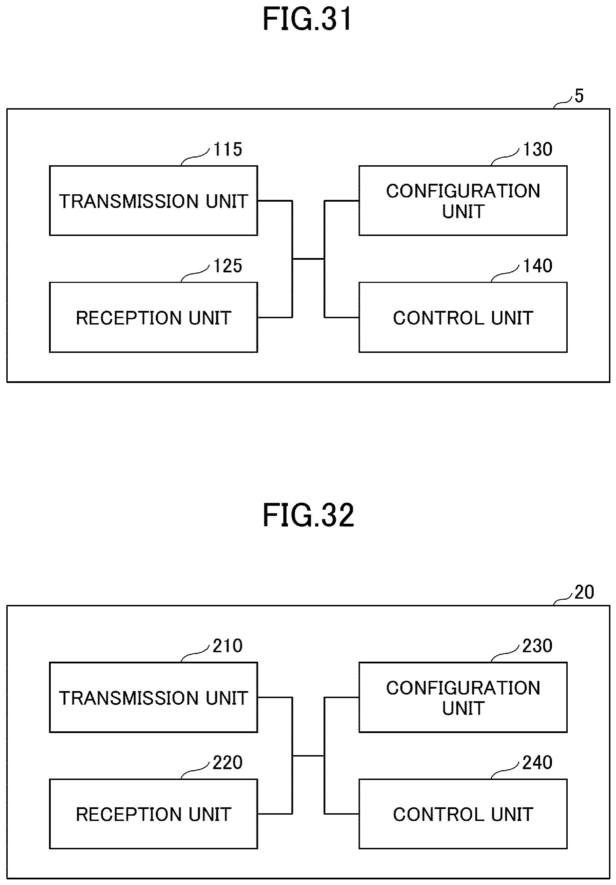

FIG. 31 is a diagram illustrating an example of a functional configuration of the network node apparatus 5. The network node apparatus 5 may be any of the network node apparatuses of the RAN 10 (the base station 10), the vAMF 30, the vSMF 40, the vUPF 50, the vUDM 60, the hAMF 70, the hSMF 80, the hUPF 90, the AUSF 100, the hUDM 110, and the NEF 120.

As illustrated in FIG. 31, the network node apparatus 5 includes a transmission unit 115, a reception unit 125, a configuration unit 130, and a control unit 140. The functional configuration illustrated in FIG. 31 is merely an example. As long as the operation according to the embodiment of the present invention can be performed, the functional division and the name of the functional unit may be any.

The transmission unit 115 includes a function of generating information to be transmitted to the terminal 20 or another network node apparatus and transmitting the information in a wired or wireless manner. The reception unit 125 receives various types of information transmitted from the terminal 20 or another network node apparatus.

The configuration unit 130 stores various types of configuration information in the storage device, and reads the configuration information from the storage device as necessary.

The control unit 140 controls the entire apparatus. The functional unit related to information transmission in the control unit 140 may be included in the transmission unit 110, and the functional unit related to information reception in the control unit 140 may be included in the reception unit 120. The transmission unit 115 may be referred to as a transmitter, and the reception unit 125 may be referred to as a receiver.

### <Terminal 20>

FIG. 32 is a diagram illustrating an example of a functional configuration of the terminal 20. As illustrated in FIG. 32, the terminal 20 includes a transmission unit 210, a reception unit 220, a configuration unit 230, and a control unit 240. The functional configuration illustrated in FIG. 32 is merely an example. The functional division and the name of the functional unit may be any division and name as long as the operation according to the embodiment of the present invention can be executed. The transmission unit 210 and the reception unit 220 may be collectively referred to as a communication unit.

The transmission unit 210 generates a transmission signal from transmission data and wirelessly transmits the transmission signal. The reception unit 220 wirelessly receives various signals and acquires a signal of a higher layer from the received signal of the physical layer. The reception unit 220 has a function of receiving an NR-PSS, an NR-SSS, an NR-PBCH, a DL/UL/SL control signal, a DCI by a PDCCH, data by a PDSCH, and the like transmitted from the base station 10. In addition, for example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to the other terminal 20 as D2D communication, and the reception unit 220 may receive the PSCCH, the PSSCH, the PSDCH, the PSBCH, or the like from the other terminal 20.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information that is configured in advance.

The control unit 240 controls the terminal 20. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

According to the present embodiment, at least the following Supplementary Notes 1 to 4 are disclosed.

### <Supplementary Note 1>

### [Clause 1]

A terminal including:
a control unit configured to conceal and integrity-protect a first message relating to authentication control or service provisioning control with respect to a network node apparatus that handles mobility control or connection control; and
a transmission unit configured to include the first message that is concealed and integrity-protected in a second message relating to mobility control or connection control and to transmit the second message to a network.

### [Clause 2]

The terminal as described in Clause 1, wherein the network node apparatus is an AMF provided in a VPLMN.

### [Clause 3]

A network node apparatus including:
a control unit configured to conceal and integrity-protect a message relating to authentication control or service provisioning control with respect to another network node apparatus that handles mobility control or connection control; and
a transmission unit configured to transmit the message to a terminal via the other network node apparatus.

### [Clause 4]

The network node apparatus as described in Clause 3, wherein the network node apparatus is provided in an HPLMN, and the other network node apparatus is provided in a VPLMN.

### [Clause 5]

A network node apparatus including:
a control unit configured to receive, from a terminal, a message relating to mobility control or connection control, and to determine necessity for re-authentication from a key set identifier included in the message; and
a transmission unit configured, when re-authentication is necessary, to forward the message to another network node apparatus that handles authentication control or service provisioning control.

### [Clause 6]

A communication method executed by a terminal, the communication method including:
concealing and integrity-protecting a first message relating to authentication control or service provisioning control with respect to a network node apparatus that handles mobility control or connection control; and
including the first message that is concealed and integrity-protected in a second message relating to mobility control or connection control and transmitting the second message to a network.

According to any of Supplementary Notes 1 to 6, there is provided a technique that enables a terminal to perform communication safely at the time of roaming even when the HPLMN does not trust the VPLMN. According to Clauses 2 and 4, a network node apparatus provided in an HPLMN/VPLMN is clarified.

### <Supplementary Note 2>

### [Clause 1]

A network node apparatus including:
a transmission unit configured to assign, to another network node apparatus that handles authentication control or service provisioning control, an identifier linked with a terminal context within the other network node apparatus, and to transmit to the other network node apparatus a message including the identifier; and
a control unit configured to perform processing for mobility control or connection control using the identifier without using a permanent identifier of a terminal.

### [Clause 2]

The network node apparatus as described in Clause 1, wherein the other network node apparatus is provided in an HPLMN, and the network node apparatus is provided in a VPLMN.

### [Clause 3]

A network node apparatus including:
a reception unit configured to receive an instruction from a first network node apparatus that determines establishment of a session based on a request from a terminal; and
a control unit configured, based on the instruction, to configure a data relaying route related to a target session without using a permanent identifier of the terminal, by using a terminal temporary identifier allocated by a second network node apparatus that handles mobility control or connection control, and a session identifier allocated by the terminal.

### [Clause 4]

The network node apparatus as described in Clause 3, wherein the first network node apparatus is provided in an HPLMN, and the second network node apparatus and the network node apparatus are provided in a VPLMN.

### [Clause 5]

A communication method executed by a network node apparatus, the communication method including:
assigning, to another network node apparatus that handles authentication control or service provisioning control, an identifier linked with a terminal context within the other network node apparatus, and transmitting to the other network node apparatus a message including the identifier; and
performing processing for mobility control or connection control using the identifier without using a permanent identifier of a terminal.

According to any of Clauses 1 to 5, a technique is provided that enables a terminal to perform communication safely at the time of roaming even when the HPLMN does not trust the VPLMN. According to Clauses 2 and 4, a network node apparatus provided in an HPLMN/VPLMN is clarified.

### <Supplementary Note 3>

### [Clause 1]

A network node apparatus including:
a reception unit configured to receive, from a first network node apparatus that handles authentication control or service provisioning control, terminal security capability information and a key;
a control unit configured to select a security algorithm used for secure communication between a terminal and a second network node apparatus, and to derive a concealment key and an integrity protection key; and
a transmission unit configured to transmit the security algorithm, the concealment key, and the integrity protection key to the second network node apparatus, and to transmit the security algorithm to the terminal.

### [Clause 2]

The network node apparatus as described in Clause 1, wherein the first network node apparatus is an AMF and the second network node apparatus is a UPF.

### [Clause 3]

A terminal including:
a control unit configured, in a security protocol layer of a U-plane protocol stack, to encrypt and integrity-protects each packet of a QoS flow, excluding predetermined header information, and to deliver the encrypted and integrity-protected packet to a protocol layer below the security protocol layer; and
a transmission unit configured to transmit each packet that is encrypted and integrity-protected.

### [Clause 4]

The terminal as described in Clause 3, wherein the protocol layer below the security protocol layer is SDAP, and the control unit is configured, in the security protocol layer, to decrypt a packet delivered from the SDAP and to verify integrity of the packet.

### [Clause 5]

A communication method executed by a network node apparatus, the communication method including:
receiving, from a first network node apparatus that handles authentication control or service provisioning control, terminal security capability information and a key;
selecting a security algorithm used for secure communication between a terminal and a second network node apparatus, and deriving a concealment key and an integrity protection key; and
transmitting the security algorithm, the concealment key, and the integrity protection key to the second network node apparatus, and transmitting the security algorithm to the terminal.

According to any of Clauses 1 to 5, a technique is provided that enables a terminal to perform communication safely at the time of roaming even when the HPLMN does not trust the VPLMN. According to Clause 2, a network node apparatus is clarified. According to Clause 4, the operation at the time of verification becomes clear.

### <Supplementary Note 4>

### [Clause 1]

A terminal including:
a reception unit configured to receive, from a network, a session establishment accept message; and
a control unit configured, based on an identifier, included in the session establishment accept message, that identifies a user small-data transmission scheme, to determine a communication partner of user small data that is concealed and integrity-protected.

### [Clause 2]

The terminal as described in Clause 1, wherein the user small data transmission scheme identified by the identifier is C-plane CIoT 5GS optimization UPF anchor data transmission, or NEF-based Non-IP data delivery.

### [Clause 3]

The terminal as described in Clause 2, wherein when the user small data transmission scheme is the C-plane CIoT 5GS optimization UPF anchor data transmission, the communication partner is a UPF, and when the user small data transmission scheme is the NEF-based Non-IP data delivery, the communication partner is an AMF.

### [Clause 4]

A communication method executed by a terminal, the communication method including:
receiving, from a network, a session establishment accept message; and
based on an identifier, included in the session establishment accept message, that identifies a user small data transmission scheme, determining a communication partner of user small data that is concealed and integrity-protected.

According to any of Clauses 1 to 4, a technique is provided that enables a terminal to safely transmit user small data. According to Clauses 2 and 3, the present technique can be applied to a specific user small data transmission scheme.

### (Hardware Configuration)

The block diagrams (FIGS. 31 and 32) used in the description of the embodiment described above illustrate the block of functional units. Such functional blocks (configuration parts) are attained by at least one arbitrary combination of hardware or software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

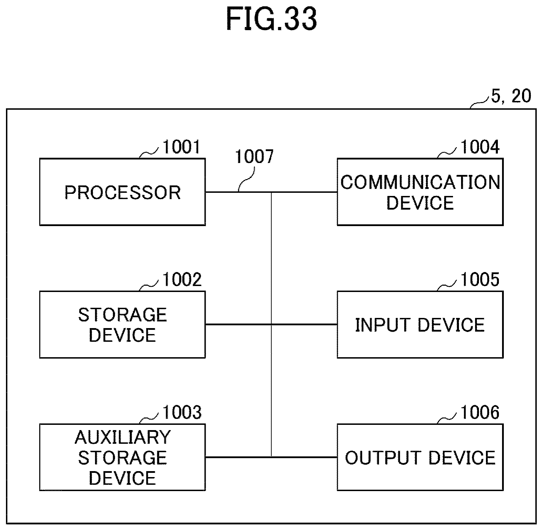

For example, the network node apparatus 5, and the terminal 20 and the like in one embodiment of this disclosure may function as a computer for performing the processing of a radio communication method of this disclosure. FIG. 33 is a diagram illustrating an example of a hardware configuration of the network node apparatus 5 and the terminal 20 and the like according to one embodiment of this disclosure. The network node apparatus 5 and the terminal 20 described above may be physically configured as a computer apparatus including a processor 1001, a storage device 1002, an auxiliary storage device 1003, a communication device 1004, an input device 1005, an output device 1006, a bus 1007, and the like. It should be noted that network node apparatuses other than the authorization apparatus 40 and the user information exposure apparatus 50 are also configured as shown in FIG. 33.

Note that, in the following description, the word "apparatus" can be replaced with a circuit, a device, a unit, or the like. The hardware configuration of the network node apparatus 5 and the terminal 20 and the like may be configured to include one or a plurality of apparatuses illustrated in the drawings, or may be configured not to include a part of the apparatuses.

Each function of the network node apparatus 5 and the terminal 20 is attained by reading predetermined software (a program) on hardware such as the processor 1001 and the storage device 1002 such that the processor 1001 performs an operation, and by controlling the communication of the communication device 1004 or by controlling at least one of reading or writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 or the communication device 1004, and thus, executes various processing. A program for allowing a computer to execute at least a part of the operation described in the embodiment described above is used as the program. The control unit 140 may be attained by a control program that is stored in the storage device 1002 and is operated by the processor 1001. Also, for example, the control unit 240 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), or the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, or the like. The storage medium described above, for example, may be a database including at least one of the storage device 1002 or the auxiliary storage device 1003; a server; or a suitable medium.

The communication device 1004 is hardware (a transmitting and receiving device) for performing communication with respect to the computer through at least one of a wired network or a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) or time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the network node apparatus 5 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware components.

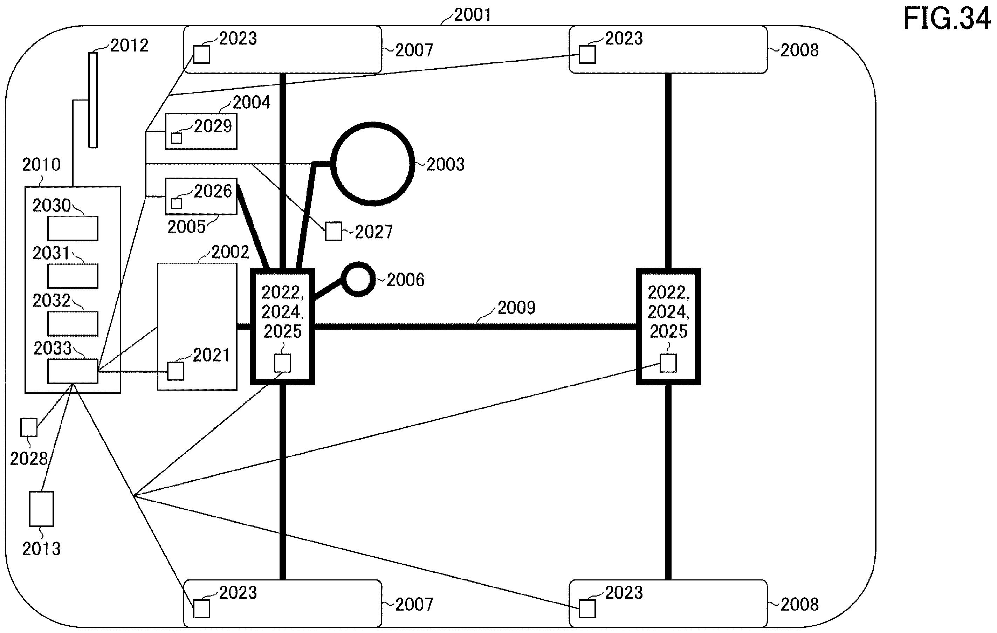

The network node apparatus 5 or the terminal 20 may be provided in a vehicle 2001. FIG. 34 shows a configuration example of a vehicle 2001 according to the present embodiment. As shown in FIG. 34, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The network node apparatus 300 or the terminal 20 of the aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of, signals from the various sensors 2021 to 2028 described above input to the electronic control unit 2010, information obtained based on the signals, or information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the network node apparatus 300 and the terminal 20 have been described by using a functional block diagram, but such an apparatus may be attained by hardware, software, or a combination thereof. Each of software that is operated by a processor of the base station 10 and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultrawideband (UWB), Bluetooth (Registered Trademark), and other suitable systems and a next-generation system that is expanded, modified, generated, or specified on the basis thereof. In addition, a combination of a plurality of systems (for example, a combination of at least 5G and one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 or network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) or a radio technology (an infrared ray, a microwave, and the like), and at least one of the wire technology or the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel or the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station or the base station sub-system, whichever is performing the communication service in the coverage.

In the present disclosure, the transmission of information from the base station to the terminal may be read as the base station instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the network node apparatus 5 or the terminal 20 may be referred to as a transmitting apparatus, a receiving apparatus, a communication apparatus, and the like. Note that, at least one of the network node apparatus 5 or the terminal 20 may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station or the mobile station also includes an apparatus that is not necessarily moved at the time of a communication operation. For example, at least one of the base station or the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as deviceto-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, or print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission or the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, or the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe or TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may be different for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

- 10: RAN
- 20: terminal
- 30: vAMF
- 40: vSMF
- 50: vUPF
- 60: vUDM
- 70: hAMF
- 80: hSMF
- 90: hUPF
- 100: AUSF
- 110: hUDM
- 120: NEF
- 115: transmission unit
- 125: reception unit
- 130: configuration unit
- 140: control unit
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheels
- 2008: rear wheels
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port (IO port)

## Claims

1. A network node apparatus comprising:
a reception unit configured to receive, from a first network node apparatus that handles authentication control or service provisioning control, terminal security capability information and a key;
a control unit configured to select a security algorithm used for secure communication between a terminal and a second network node apparatus, and to derive a concealment key and an integrity protection key; and
a transmission unit configured to transmit the security algorithm, the concealment key, and the integrity protection key to the second network node apparatus, and to transmit the security algorithm to the terminal.

2. The network node apparatus as claimed in claim 1, wherein the first network node apparatus is an AMF and the second network node apparatus is a UPF.

3. A terminal comprising:
a control unit configured, in a security protocol layer of a U-plane protocol stack, to encrypt and integrity-protects each packet of a QoS flow, excluding predetermined header information, and to deliver the encrypted and integrity-protected packet to a protocol layer below the security protocol layer; and
a transmission unit configured to transmit each packet that is encrypted and integrity-protected.

4. The terminal as claimed in claim 3, wherein the protocol layer below the security protocol layer is SDAP, and the control unit is configured, in the security protocol layer, to decrypt a packet delivered from the SDAP and to verify integrity of the packet.

5. A communication method executed by a network node apparatus, the communication method comprising:
receiving, from a first network node apparatus that handles authentication control or service provisioning control, terminal security capability information and a key;
selecting a security algorithm used for secure communication between a terminal and a second network node apparatus, and deriving a concealment key and an integrity protection key; and
transmitting the security algorithm, the concealment key, and the integrity protection key to the second network node apparatus, and transmitting the security algorithm to the terminal.
